# EUROPEAN PATENT APPLICATION

(11) **EP 4 760 474 A1**
(43) Date of publication of application: **17.06.2026**
(21) Application number: 24922889.1
(22) Date of filing: 07.02.2024
(51) Int. Cl.: G06F 3/04847

(54) **MULTI-DEVICE COLLABORATIVE CONTROL METHOD, GRAPHICAL INTERFACE, AND ELECTRONIC DEVICE**

(71) Applicant: Honor Device Co., Ltd., Shenzhen, Guangdong 518040 (CN)
(72) Inventor: SHI, Jiaojiao, Shenzhen, Guangdong 518040 (CN); WANG, Lei, Shenzhen, Guangdong 518040 (CN); WANG, Yingchao, Shenzhen, Guangdong 518040 (CN)
(74) Representative: Henselmann, Alexander Gerhard
(86) International application number: PCT/CN2024/076766
(87) International publication number: WO 2025/166650

(57) **Abstract**

This application provides a multi-device collaborative control method, a graphical interface, and an electronic device. In the multi-device collaborative control method provided in this application, a first device displays a first interface, and the first interface includes a device switching region, an application switching region, and an application control region. An identifier for a switched target device is displayed in the device switching region, an identifier for an application of the target device is further displayed in the application switching region, and a control panel for an application of the target device is displayed in the application control region, in response to a first operation. An identifier for a switched target application is displayed in the application switching region, and a control panel for the target application is further displayed in the application control region, in response to a second operation. The target device is controlled to execute a corresponding task by using the target application, in response to a third operation.

## Description

### TECHNICAL FIELD

This application relates to the field of terminals, and in particular, to a multi-device collaborative control method, a graphical interface, and an electronic device.

### BACKGROUND

With development of terminal technologies, a user may use an application or a function of an electronic device to perform an activity such as exercise, a presentation, housework, or entertainment. During the activity, because the user may be far away from the electronic device or unable to free both hands, the user usually needs to repeatedly pause the current activity, and approach the electronic device to continue to control the application or the function of the electronic device, to continue the current activity. In addition, when the electronic device is controlled to execute multiple tasks, there are still problems such as cumbersome user operations, scattered distribution of operation entries, poor human-computer interaction performance, and poor user experience.

### SUMMARY

This application provides a multi-device collaborative control method, a graphical interface, and an electronic device. A first device displays a first interface, and the first interface includes a device switching region, an application switching region, and an application control region. An identifier for a switched target device is displayed in the device switching region, an identifier for an application of the target device is also displayed in the application switching region, and a control panel for an application of the target device is displayed in the application control region, in response to a first operation. An identifier for a switched target application is displayed in the application switching region, and a control panel for the target application is further displayed in the application control region, in response to a second operation. The target device is controlled to execute a corresponding task by using the target application, in response to a third operation.

According to a first aspect, this application provides a multi-device collaborative control method, where the method is applied to a first device, and the method includes: displaying a first interface, where the first interface includes a first region, a second region, and a third region; the first region includes an identifier for a second device, the second region includes identifiers for a first group of applications of the second device, and the third region includes a control panel for a first application among the first group of applications; displaying an identifier for a switched third device in the first region, displaying identifiers for a second group of applications of the switched third device in the second region, and displaying a control panel for a second application among the switched second group of applications in the third region, in response to a first operation; displaying an identifier for a switched third application in the second region, and displaying a control panel for the switched third application in the third region, in response to a second operation; and executing a first task corresponding to the third application in response to a third operation.

After the method described in the first aspect is implemented, a target application of a target device may be freely switched and selected among multiple devices and multiple applications by operating a global control interface, and a running state of the target application in the target device may be controlled across devices, where the global control interface is centrally provided with multiple user operation entries, which simplifies operations of a user to switch devices, switch applications and control applications, improves human-computer interaction performance, and improves user experience.

With reference to the multi-device collaborative control method according to the first aspect, in response to the second operation, the method further includes: switching an identifier for an application in a selected state in the second region from the identifier for the second application to the identifier for the third application.

In this way, the user may be further reminded of a selected target application, so as to help the user correctly select a desired target application.

With reference to the multi-device collaborative control method according to the first aspect, the first task includes any one or more of the following: displaying running details of the third application; or controlling a running state of the third application.

In this way, in a global control scenario, the first device can not only view running details of the target application in the target device, but also control a running state of the target application in the target device by using a corresponding control.

With reference to the multi-device collaborative control method according to the first aspect, the controlling a running state of the third application includes any one or more of the following: controlling a running state of the third application in the third device, or controlling a running state of the third application in the first device.

In this way, in a global control scenario, if a target application is not installed at a local end, the first device may control, across devices, the target application in a target device to execute a corresponding task. If the target application is installed at the local end, the first device may continue running the target application and control the target application at the local end to execute a corresponding task.

With reference to the multi-device collaborative control method according to the first aspect, the third application is an audio/video application, and the executing a first task corresponding to the third application includes: controlling the third device to pause, resume, or switch a played audio/video.

With reference to the multi-device collaborative control method according to the first aspect, the third application is an image capture application, and the first task corresponding to the third application includes: controlling the third device to capture an image.

With reference to the multi-device collaborative control method according to the first aspect, the third application is an office application, and the executing a first task corresponding to the third application includes: controlling the third device to pause, resume, or switch a presentation document.

With reference to the multi-device collaborative control method according to the first aspect, the third application is a social application, and the executing a first task corresponding to the third application includes: answering/hanging up a call.

In this way, the first device may control, across devices, a target application in a target device to execute a corresponding task in multiple application scenarios, thereby achieving convenient multi-device collaborative control.

With reference to the multi-device collaborative control method according to the first aspect, before the first operation, the method further includes: executing a first task corresponding to the first application in response to a fourth operation.

With reference to the multi-device collaborative control method according to the first aspect, the control panel includes application information, and a control for controlling an application.

With reference to the multi-device collaborative control method according to the first aspect, the first operation includes any one or more of the following: an operation performed on the first region; or an operation performed on a crown of a watch when the first device is the watch.

With reference to the multi-device collaborative control method according to the first aspect, the second operation includes any one or more of the following: an operation performed on the second region; or an operation performed on a crown of a watch when the first device is the watch.

With reference to the multi-device collaborative control method according to the first aspect, the third operation includes any one or more of the following: an operation performed on the third region; or an operation performed on a crown of a watch when the first device is the watch.

In this way, the first device may provide a virtual control or a physical control for the user to achieve global control, thereby offering diversity and convenience in operations.

With reference to the multi-device collaborative control method according to the first aspect, an area of the first region is smaller than an area of the second region, and the area of the second region is smaller than an area of the third region.

In this way, a display size of each region may be set based on an interaction frequency, an amount of content, and the like of information displayed in the region. For example, a third region of a control panel configured to display an application is set to be relatively large, a second region configured to display an identifier for an application is set to be medium, and a first region configured to display an identifier for a device is set to be relatively small.

With reference to the multi-device collaborative control method according to the first aspect, the first region is located on an upper side of a screen of the first device, the second region is located on a left side of the screen of the first device, and the third region is located on a right side of the screen of the first device.

In this way, a display position of each region may be set based on an interaction frequency, an amount of content, and the like of information displayed in the region, which improves aesthetics of an interaction interface and improves convenience of interaction.

With reference to the multi-device collaborative control method according to the first aspect, the first device is a wearable device, such as a watch, so that the user may control, by using the watch, a running state of a target application in a target device across devices at any time.

With reference to the multi-device collaborative control method according to the first aspect, the method further includes: the first device establishes a connection with the second device before the first interface is displayed.

With reference to the multi-device collaborative control method according to the first aspect, that the first device establishes a connection with the second device specifically includes: displaying a second interface, where the second interface includes an identifier for a global control function and the identifier for the second device; and the first device establishes a connection with the second device in response to an operation of dragging the identifier for the global control function to the identifier for the second device and releasing the identifier for the global control function.

In this way, the first device may be triggered, based on an operation of selecting a target device by the user, to establish a connection with the target device, so as to implement a subsequent cross-device control function based on the connection.

With reference to the multi-device collaborative control method according to the first aspect, the method further includes: the first device establishes a connection with the third device before or after the identifier for the third device is displayed.

In this way, after a target device is selected, or after a cross-device control function is enabled, connections may be established with multiple nearby devices in advance, so that after the user selects the target device, information about a target application in the target device may be quickly output.

According to a second aspect, this application provides an electronic device, where the electronic device includes one or more memories and one or more processors; the memory is coupled to the one or more processors, the memory is configured to store computer program code, the computer program code includes computer instructions, and the one or more processors invoke the computer instructions to enable the electronic device to perform the method according to any one of the implementations of the first aspect.

According to a third aspect, this application provides a communication system, where the communication system includes a first device, a second device, and a third device, the first device includes one or more memories and one or more processors; the memory is coupled to the one or more processors, the memory is configured to store computer program code, the computer program code includes computer instructions, and the one or more processors invoke the computer instructions to enable the first device to perform the method according to any one of the implementations of the first aspect.

According to a fourth aspect, this application provides a chip, where the chip is applied to an electronic device, the chip includes one or more processors, and the processor is configured to invoke computer instructions to enable the electronic device to perform the method according to any one of the implementations of the first aspect.

According to a fifth aspect, this application provides a computer-readable storage medium, including instructions. When the instructions are run on an electronic device, the electronic device is enabled to perform the method according to any one of the implementations of the first aspect.

### BRIEF DESCRIPTION OF DRAWINGS

FIG. 1 is a schematic diagram of a communication system 10 according to an embodiment of this application;
FIG. 2 is a schematic diagram of a hardware architecture of an electronic device 100 according to an embodiment of this application;
FIG. 3A, FIG. 3B, FIG. 3C, and FIG. 3D are a schematic diagram of a set of enabled multi-device control functions according to an embodiment of this application;
FIG. 4A, FIG. 4B, FIG. 4C, and FIG. 4D are a schematic diagram of a set of operation interfaces for using a multi-device collaboration function in a cooking scenario according to an embodiment of this application;
FIG. 5A, FIG. 5B, FIG. 5C, and FIG. 5D are a schematic diagram of a set of operation interfaces for using a multi-device collaboration function in a fitness scenario according to an embodiment of this application;
FIG. 6A, FIG. 6B, FIG. 6C, and FIG. 6D are a schematic diagram of a set of operation interfaces for using a multi-device collaboration function in a camera scenario according to an embodiment of this application;
FIG. 7A, FIG. 7B, FIG. 7C, and FIG. 7D are a schematic diagram of a set of operation interfaces for using a multi-device collaboration function in a screen mirroring presentation scenario according to an embodiment of this application; and
FIG. 8A, FIG. 8B, FIG. 8C, and FIG. 8D are a schematic diagram of a set of operation interfaces for using a multi-device collaboration function in a movie-watching scenario according to an embodiment of this application.

### DESCRIPTION OF EMBODIMENTS

The following clearly and completely describes the technical solutions in embodiments of this application with reference to the accompanying drawings. In the descriptions of embodiments of this application, unless otherwise specified, "/" means "or", for example, A/B may mean A or B. In this specification, "and/or" merely describes an association relationship between associated objects, and represents that three relationships may exist. For example, A and/or B may represent the following cases: Only A exists, both A and B exist, and only B exists.

The following terms "first" and "second" are merely intended for descriptive purposes, and shall not be understood as an implication or implication of relative importance or an implicit indication of a quantity of indicated technical features. Therefore, features defined with "first" and "second" may explicitly or implicitly include one or more features. In the descriptions of the embodiments of this application, unless otherwise stated, "a plurality of" means two or more.

An "embodiment" in this application means that a specific feature, structure, or characteristic described with reference to the embodiment may be included in at least one embodiment of this application. The term appearing at various locations in the specification does not necessarily refer to a same embodiment, or an independent or alternative embodiment mutually exclusive with another embodiment. A person skilled in the art explicitly and implicitly understands that the described embodiments in this application may be combined with another embodiment.

The term "user interface (user interface, UI)" in the following embodiments of this application is a medium interface for interaction and information exchange between an application or an operating system and a user, and implements conversion between an internal form of information and a form that can be accepted by the user. The user interface is source code written in a specific computer language such as java or an extensible markup language (extensible markup language, XML). Interface source code is parsed and rendered on an electronic device, and is finally presented as content that can be identified by the user. The user interface is usually in a representation form of a graphical user interface (graphic user interface, GUI), and the graphical user interface is a user interface that is related to a computer operation and that is displayed in a graphical manner. The user interface may be a visual interface element such as a text, an icon, a button, a menu, a tab, a text box, a dialog box, a status bar, a navigation bar, or a Widget displayed on a display of the electronic device.

When a user uses an application or a function of an electronic device to perform an activity such as housework, exercise, work, and entertainment, to provide the user with uninterrupted and immersive activity experience, this application provides a multi-device collaborative control method, a graphical interface, and an electronic device.

In the multi-device collaborative control method provided in this application, a first device displays a first interface, and the first interface includes a device switching region, an application switching region, and an application control region. An identifier for a switched target device is displayed in the device switching region, identifiers for a group of applications of the target device are displayed in the application switching region, and a control panel for a target application among the group of applications is displayed in the application control region, in response to a first operation. An identifier for a switched target application is displayed in the application switching region, and a control panel for the switched target application is further displayed in the application control region, in response to a second operation. The first device executes a task corresponding to the target application, for example, a task of viewing running details of the target application, or controlling a running state of the target application in the target device across devices, in response to a third operation.

After the multi-device collaborative control method, the graphical interface, and the electronic device provided in this application are implemented, global control may be performed on multiple devices, multiple applications, and running states of applications. In addition, user operation entries are centralized, thereby simplifying user operations, improving human-computer interaction performance, and improving user experience.

Next, related concepts involved in this application are briefly described.

**Multi-device collaborative control function:** two or more electronic devices are linked or collaborate to execute some tasks, for example, execute tasks such as cross-device application continuity, content sharing, and capability sharing through multi-device collaboration.

Application continuity: One electronic device may continue running an application that runs on another electronic device. For example, the first device may continue running a target application based on received running data of the target application in the target device that is sent by the target device. In addition, the first device may further execute, in response to an operation performed on the target application, a task corresponding to the target application, for example, a task of viewing running details of the target application, or controlling a running state of the target application in the target device across devices. While the first device continues running an application in the target device, in one implementable manner, the first device may not actually run the application, but display an application state and a related control based on running data of the application that is transmitted by the target device; and in another implementable manner, if the application is installed in the first device, the first device may also run the application, rather than merely displaying the application state and the related control based on the running data of the application that is transmitted by the target device. In addition, while the first device continues running an application in the target device, in one implementable manner, the target device may continue to run the application, when the target device continues to run the application, the first device may control, across devices, a state of the target device running the application; and in another implementable manner, the target device may also stop running the application, when the target device stops running the application, the first device may continue to run the application and control a running state of the application on a first device side.

Content sharing: Sharing contents such as files, photos, videos, audios, and text between different electronic devices. For example, the first device may receive contents shared by the target device, or share contents with the target device.

Capability sharing: Sharing capabilities such as software and hardware between different electronic devices. For example, taking screen display capability sharing as an example, the target device equipped with a relatively large display may provide not only a content display function for itself, but also a content display function for the first device, that is, the first device may project its own content onto the target device for display and control. Taking sensor hardware capability sharing as an example, the first device equipped with a sensor may provide not only a sensing data detection function for itself, but also a sensing detection function for the target device, that is, the target device may control the first device to detect and obtain sensing data. A camera, a cellular network, and the like may also be shared.

Based on the foregoing brief description of a multi-device collaborative control function, it may be learned that application continuity, content sharing, and capability sharing that are provided by the multi-device collaborative control function relate to cross-device control. Therefore, in a cross-device control scenario, particularly a cross-device control scenario in which multiple devices and multiple applications collaborate to execute multiple tasks, only better global control can provide better multi-device collaborative control functions.

**The first device** is a device that plays a control center role in a multi-device collaborative control scenario. Therefore, the first device may also be referred to as a central device.

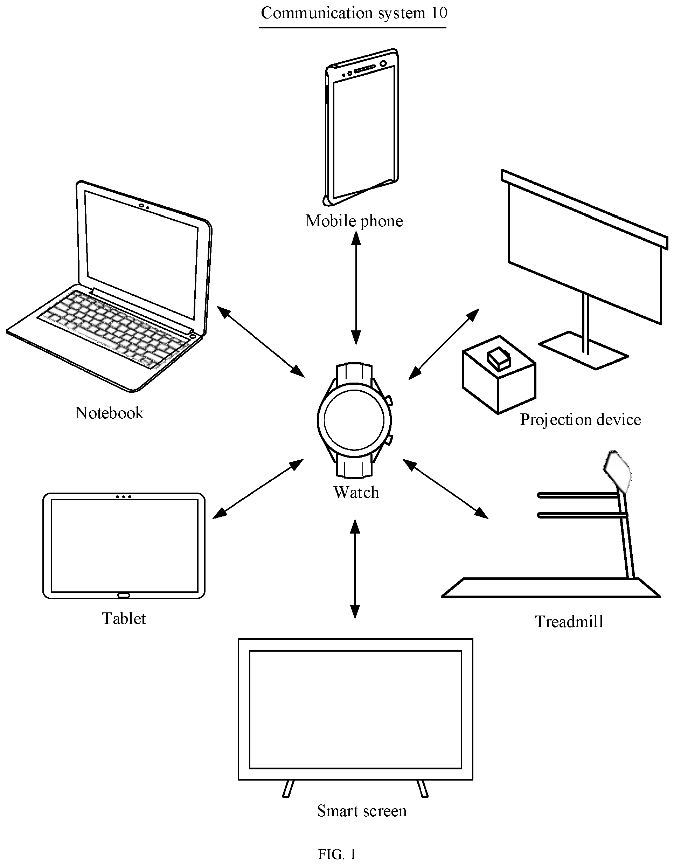

In an optional implementation, the first device includes any device in a multi-device collaborative control scenario, for example, a mobile phone, a notebook, or a tablet as described later in FIG. 1. This is because each device in a multi-device collaborative control scenario usually has a capability to control another device. When different cross-device tasks are executed, each device may potentially serve as a central device to control another device.

In a preferred implementation, the first device includes a wearable device in a multi-device collaborative control scenario. This is because wearable devices possess characteristics such as portability and lightness, which enables a user to freely and quickly control and execute a multi-device collaborative control task in various activity scenarios, such as exercise, work, housework, and entertainment, without interrupting the user's ongoing activity, thereby bringing smooth immersive activity experience to the user. Such wearable devices often take the form of portable accessories. Specific product forms include but are not limited to: a wrist-mounted product such as a watch or a bracelet; and a head-mounted product such as glasses, a helmet, or a headband. This is not specifically limited in this embodiment of this application.

**The target device** is a device that plays a controlled role in a multi-device collaborative control scenario.

In an optional implementation, the target device includes any device in a multi-device collaborative control scenario. This is because each device in a multi-device collaborative control scenario supports being controlled by another device. When different cross-device tasks are executed, each device may potentially serve as a controlled device.

### Connection

Quantity of connections: A first device may support connecting to one or more devices at the same time, that is, devices connected to the first device include but are not limited to a second device.

Connection time: The first device may establish a connection with the second device either before receiving the first operation or after receiving the first operation.

Connection type: The first device may establish a connection with another device such as the second device or a third device via a wireless local area network (wireless local area networks, WLAN), Bluetooth (bluetooth, BT), near field communication (near field communication, NFC), or cellular communication. The connection may be a short connection and/or a long connection. The long connection and the short connection are merely relative concepts. Short connection: A connection is established between the first device and the second device only when data transmission is needed, and the connection is disconnected after data transmission, that is, a short connection established each time is only used to complete a single data transmission. Long connection: A current connection between the first device and the second device is maintained without disconnection after data transmission. If subsequent data transmission is needed, data may be directly transmitted based on the maintained connection. When the first device and the second device maintain a long connection, the first device and the second device can continuously send a plurality of data packets over one connection. In addition, during the period when the long connection is maintained, if no data packet is sent for a long time, the first device may further detect a current communication link with the second device to promptly detect and fix a fault in the communication link.

### Operation

First operation: A first operation is used to control the first device to switch a target device from one or more nearby devices, and subsequently control, across devices, the target device to execute a task, and in response to the first operation, the first device further displays an identifier for the switched target device. Specifically, the first device may display an identifier for one or more devices on a first interface. If an identifier for one device is displayed, the device is the target device; and if identifiers for multiple devices are displayed, an identifier for a device in a selected state is an identifier for the target device. The first operation includes any one of the following types of operations: a swipe operation or a tap operation performed on a device switching region, an operation performed on a physical control of the first device, or the like. When the first device is a watch, the physical control includes a crown.

Second operation: A second operation is used to control the first device to switch a target application from a group of applications of the target device, and subsequently control, across devices, the target application of the target device to execute a task, and in response to the second operation, the first device further displays an identifier for the switched target application. Specifically, the first device may display an identifier for one or more applications on the first interface. If an identifier for one application is displayed, the application is the target application; and if identifiers for multiple applications are displayed, an identifier for an application in a selected state is an identifier for the target device. The second operation includes any one of the following types of operations: a swipe operation or a tap operation performed on an application switching region, an operation performed on a physical control of the first device, or the like. When the first device is a watch, the physical control includes a crown.

Third operation: A third operation is used to view running details of a target application, or control, across devices, the target application of the target device to execute a task. For different types of target applications, implementations of the third operation may be different. For details, reference may be made to several different multi-device collaborative control scenarios described in the following examples. Details are not described herein again.

### Task

That the first device executes a task (also referred to as a first task) corresponding to the target application includes any one or more of the following tasks: displaying running details of the target application, or controlling a running state of the target application. The controlling a running state of the target application includes: controlling a running state of a target application in the target device across devices, and/or controlling a running state of a target application (if any) in the first device.

**FIG. 1** **is a communication system 10 applied to a multi-device collaborative control method provided in this application.**

As shown in FIG. 1, the communication system 10 includes but is not limited to a watch, a mobile phone, a notebook, a tablet, a smart screen, a treadmill, a projection device, or the like. The watch may be referred to as a first device, and the mobile phone, the notebook, the tablet, the smart screen, the treadmill, the projection device, and the like are connectable devices near the watch. These devices may serve as target devices of the first device, and the first device controls, across devices, the target devices to execute tasks.

A connection manner between devices in the communication system 10 includes but is not limited to any one or more of the following: a connection established via WLAN, BT, NFC, or cellular communication. A connection established via WLAN or BT may be point-to-point, point-to-multipoint, or multipoint-to-multipoint, that is, the watch may establish a connection with one or more devices at the same time. This is not limited in this embodiment of this application.

The communication system 10 may provide a multi-device collaborative control function, for example, the foregoing execution of cross-device tasks such as application continuity, content sharing, and capability sharing through multi-device collaboration. In addition, multiple devices and multiple applications may be specifically controlled to execute corresponding cross-device tasks by using a global control interface provided by a device serving as a control center. For example, using the watch as a control center, the watch may establish a connection with any one or more of the nearby devices such as the mobile phone, the notebook, the tablet, the smart screen, the treadmill, and the projection device. The watch may display a global control interface that includes but is not limited to a device switching region, an application switching region, and an application control region. A user may operate the global control interface for cross-device control of devices near the watch to execute corresponding tasks. Specifically, in response to a first operation performed on the watch, the watch may switch a different target device from the nearby devices for subsequent cross-device control of the target device to execute a task. After the watch switches the target device, in response to a second operation performed on the watch, the watch may further switch a different target application from a set of applications in the target device for subsequent cross-device control of the target application in the target device to execute a task. After the watch switches the target application, in response to an operation performed on the target application, the watch views running details of the target application or controls a running state of the target application across devices. For specific implementation of the multi-device collaborative control function provided by the communication system 10, reference may be further made to the following detailed description of UI implementation. Details are not described herein again.

Types and quantities of electronic devices included in the communication system 10 shown in FIG. 1 are merely examples. The types and the quantities of the electronic devices included in the communication system 10 are not limited in this application. That is, the electronic device provided in this application may also be a terminal device equipped with iOS^{®}, Android^{®}, Microsoft^{®}, or another operating system, for example, a wearable device, a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, an in-vehicle device, a smart home device, and/or a smart city device. A specific form of the electronic device is not limited in this application. Optionally, in most scenarios, an electronic device that plays a control center role may be any type of devices such as a watch, a mobile phone, a notebook, a tablet, or the like. Preferably, in an activity scenario such as exercise, work, housework, or entertainment, an electronic device that plays a control center role may be limited to a wearable device, so that a user may conveniently and quickly operate the wearable device to execute a cross-device task, or the like. FIG. 1 only shows a watch as an example of a control center, which should not constitute a limitation on this application.

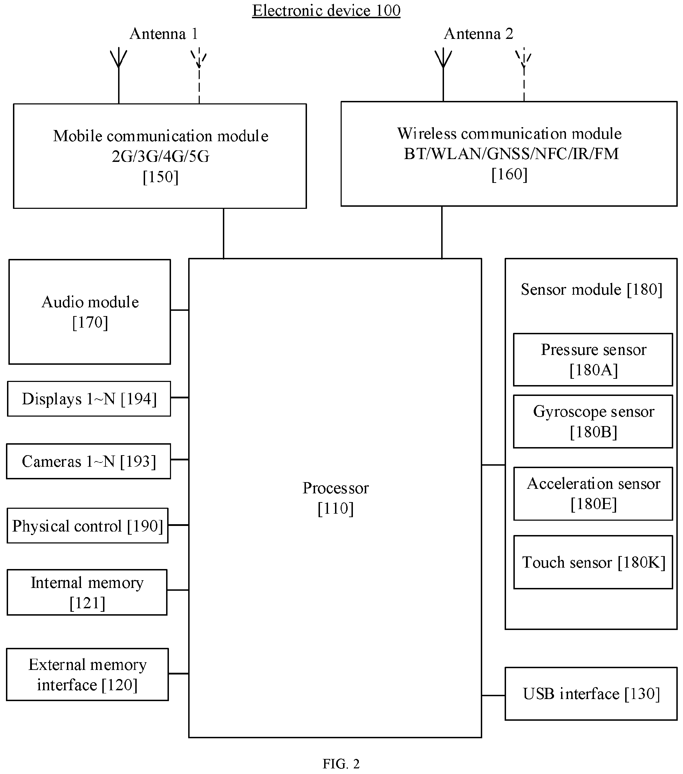

**Based on the foregoing description of the communication system 10, electronic devices involved in the communication system 10 are described in detail below with reference to** **FIG. 2****.**

An electronic device 100 shown in FIG. 2 may be any one of the electronic devices included in the communication system 10. The electronic device 100 may include a processor 110, an external memory interface 120, an internal memory 121, a universal serial bus (universal serial bus, USB) interface 130, an antenna 1, an antenna 2, a mobile communication module 150, a wireless communication module 160, an audio module 170, a sensor module 180, a physical control 190, a camera 193, a display 194, and the like. The sensor module 180 may include a pressure sensor 180A, a gyroscope sensor 180B, an acceleration sensor 180E, a touch sensor 180K, and the like.

It may be understood that the structure illustrated in this embodiment of this application constitutes no specific limitation on the electronic device 100. In some other embodiments of this application, the electronic device 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors. The controller may be a nerve center and a command center of the electronic device 100. The controller may generate an operation control signal based on instruction operation code and a timing signal, to complete control of instruction fetching and instruction execution.

A memory may be further disposed in the processor 110 to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

In this embodiment of this application, the processor 110 may be configured to collaborate with other software and hardware modules of the electronic device 100 to perform the following method: enabling a multi-device collaborative control function based on a detected operation; and after enabling the multi-device collaborative control function, switching a to-be-controlled target device based on a received first operation, switching a to-be-controlled target application based on a received second operation, and executing a task related to the target application based on a received third operation. For specific implementation of the method, reference may be made to the following detailed descriptions of UI embodiments. Details are not described herein again.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 130 is an interface that complies with USB standard specifications, and may be specifically a Mini USB interface, a Micro USB interface, a USB Type C interface, or the like. The USB interface 130 may be configured to connect to a charger to charge the electronic device 100, or may be configured to transmit data between the electronic device 100 and a peripheral device, or may be configured to connect to a headset to play an audio by using the headset. The interface may alternatively be configured to connect to another electronic device, for example, an AR device.

It may be understood that, an interface connection relationship between the modules shown in this embodiment of this application is merely an example for description, and constitutes no limitation on the structure of the electronic device 100. In some other embodiments of this application, the electronic device 100 may alternatively use an interface connection manner different from that in the embodiment, or a combination of a plurality of interface connection manners.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication bands. Different antennas may be further multiplexed to improve antenna utilization. For example, the antenna 1 may be multiplexed into a diversity antenna of a wireless local area network. In some other embodiments, the antenna may be used together with a tuning switch.

The mobile communication module 150 may provide a solution applied to the electronic device 100 for wireless communication including 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal obtained after modulation by the modem processor, and convert, through the antenna 1, an amplified signal into an electromagnetic wave for radiation. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low frequency baseband signal into a medium or high frequency signal. The demodulator is configured to demodulate a received electromagnetic wave signal into a low-frequency baseband signal. Then, the demodulator transfers, to the baseband processor for processing, the low frequency baseband signal obtained through demodulation. The low-frequency baseband signal is processed by the baseband processor and then transferred to the application processor. The application processor outputs a sound signal by using an audio device (that is not limited to a speaker, a receiver, and the like), or displays an image or a video by using the display 194. In some embodiments, the modem processor may be an independent device. In some other embodiments, the modem processor may be independent of the processor 110 and disposed in a same device as the mobile communication module 150 or another functional module.

The wireless communication module 160 may provide a solution for wireless communication that is applied to the electronic device 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more devices integrating at least one communication processing module. The wireless communication module 160 receives electromagnetic waves by using the antenna 2, performs frequency demodulation and filtering on an electromagnetic wave signal, and sends a processed signal to the processor 110. The wireless communication module 160 may further receive a to-be-sent signal from the processor 110, perform frequency modulation and amplification on the to-be-sent signal, and convert, by using the antenna 2, the to-be-sent signal into an electromagnetic wave for radiation.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), a satellite based augmentation system (satellite based augmentation systems, SBAS), and/or the like.

In this embodiment of this application, in the electronic device 100, the antenna 1 may be coupled to the mobile communication module 150, or the antenna 2 may be coupled to the wireless communication module 160, so that the electronic device 100 may establish a connection with a network and another device and transmit data by using wireless communication technologies.

The electronic device 100 implements a display function by using the GPU, the display 194, the application processor, and the like. The GPU is a microprocessor for image processing, and is connected to the display 194 and the application processor. The GPU is configured to perform mathematical and geometric computing for graphics rendering. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD). The display panel may be further made from an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a miniled, a microled, a micro-oled, a quantum dot light emitting diode (quantum dot light emitting diodes, QLED), or the like. In some embodiments, the electronic device 100 may include 1 or N displays 194, where N is a positive integer greater than 1.

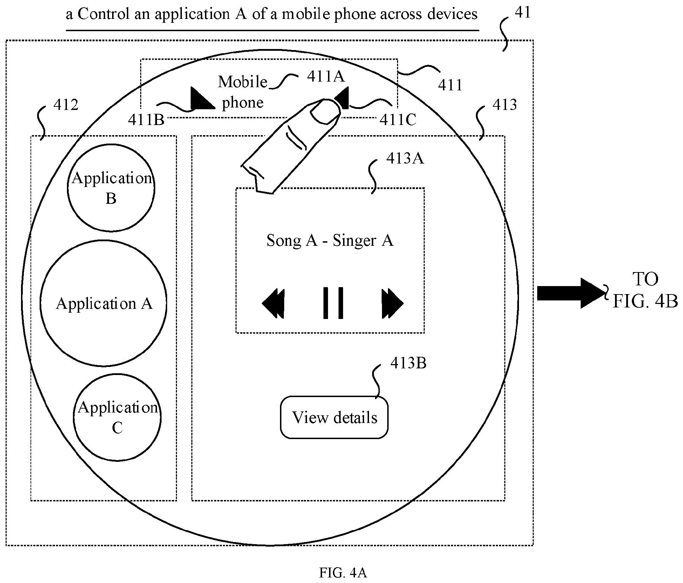

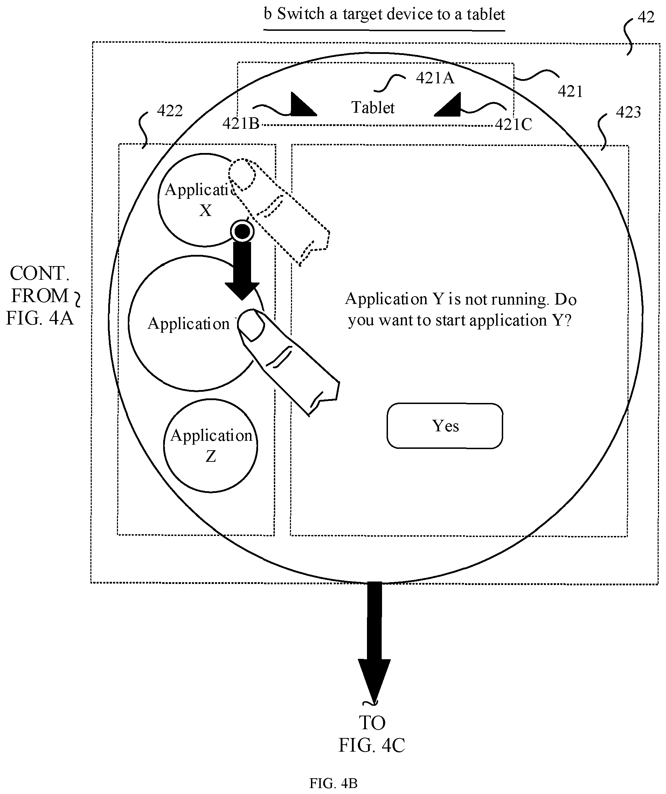

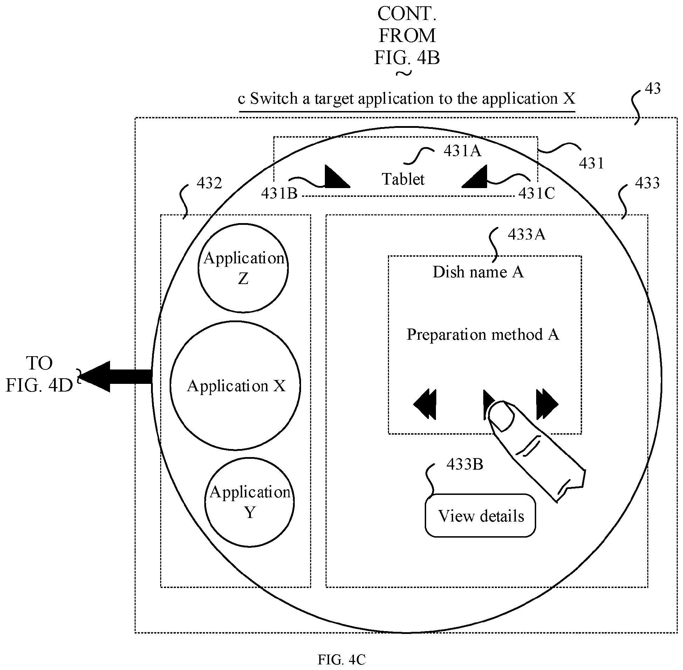

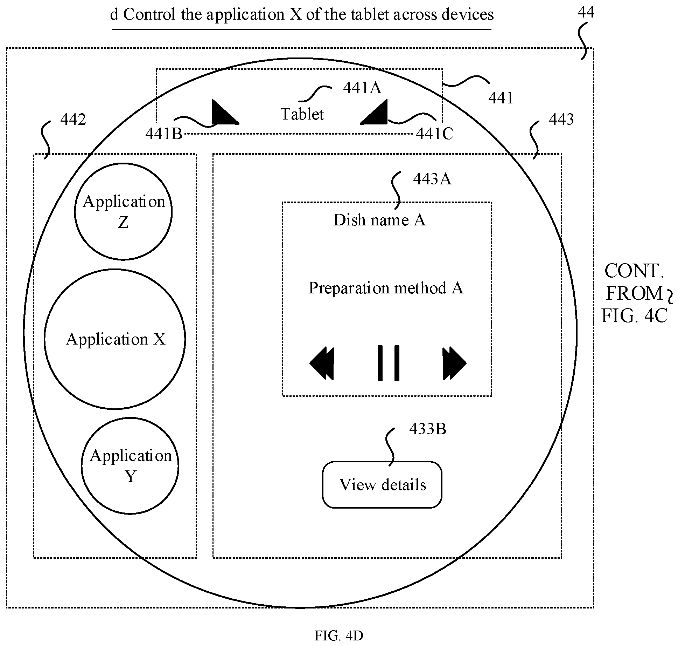

In this embodiment of this application, the electronic device 100 may display a global control interface related to the multi-device collaborative control function by using the display 194, including but not limited to the following user interfaces shown in FIG. 4 to FIG. 8.

The electronic device 100 may implement an image capture function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal. The photosensitive element of the camera transmits the electrical signal to the ISP for processing, to convert the electrical signal into an image visible to naked eyes. The ISP may further perform algorithm optimization on noise and brightness of the image. The ISP may further optimize parameters such as exposure and color temperature of an image capture scenario. In some embodiments, the ISP may be disposed in the camera 193.

The camera 193 is configured to capture a still image or a video. An optical image of an object is generated through a lens and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

In this embodiment of this application, the electronic device 100 may execute an image capture task after receiving a cross-device instruction from another device. For example, after receiving a cross-device instruction from a watch, the tablet described later may execute a video recording task.

The internal memory 121 may include one or more random access memories (random access memory, RAM) and one or more non-volatile memories (non-volatile memory, NVM).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a fifth generation DDR SDRAM is usually referred to as a DDR5 SDRAM), and the like. The processor 110 may directly read from or write into the random access memory. The random access memory may be configured to store an executable program (for example, a machine instruction) of an operating system or another running program, and may be further configured to store data of a user and data of an application, and the like.

The non-volatile memory may include a magnetic disk storage device and a flash memory (flash memory). The non-volatile memory may also store the executable program, the data of the user, the data of the application, and the like, which may be loaded into the random access memory in advance for direct reading and writing by the processor 110.

The external memory interface 120 may be configured to connect to an external non-volatile memory, to extend a storage capability of the electronic device 100. The external non-volatile memory communicates with the processor 110 by using the external memory interface 120, to implement a data storage function. For example, files such as music and a video are stored in the external non-volatile memory.

In this embodiment of this application, the electronic device 100 may store information about applications that control target devices across devices. For example, as described later, the watch stores information about running states and corresponding control functions of an application A, an application B, an application C, and the like in the mobile phone; information about running states and corresponding control functions of an application X, an application Y, an application Z, and the like in the tablet; information about running states and corresponding control functions of an application L, an application M, an application N, and the like in the tablet; or information about running states and corresponding control functions of an application U, an application V, an application W, and the like in the smart screen.

The electronic device 100 may implement an audio function such as music playing or sound recording by using the audio module 170, the speaker, the receiver, the microphone, the headset jack, the application processor, and the like. The audio module 170 is configured to convert digital audio information into an analog audio signal for output, and is further configured to convert an analog audio input into a digital audio signal. The audio module 170 may be further configured to encode and decode an audio signal. In some embodiments, the audio module 170 may be disposed in the processor 110 or some functional modules of the audio module 170 may be disposed in the processor 110.

In this embodiment of this application, when the electronic device 100 continues running an application in another device, the electronic device 100 may continue to play a running state of the application in the another device by using the audio module 170. Specifically, as described later, the watch continues to play music in the mobile phone, recipes in the tablet, and the like.

The pressure sensor 180A is configured to sense a pressure signal, and may convert the pressure signal into an electrical signal. In some embodiments, the pressure sensor 180A may be disposed in the display 194. There are many types of pressure sensors 180A, such as a resistive pressure sensor, an inductive pressure sensor, and a capacitive pressure sensor. The capacitive pressure sensor may include at least two parallel plates made of a conductive material. When force is applied onto the pressure sensor 180A, a capacitance between electrodes changes. The electronic device 100 determines intensity of pressure based on a change of the capacitance. When a touch operation is performed on the display 194, the electronic device 100 detects intensity of the touch operation based on the pressure sensor 180A. The electronic device 100 may also calculate a touch location based on a detected signal of the pressure sensor 180A. In some embodiments, touch operations performed at a same touch location but having different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is executed.

The gyroscope sensor 180B may be configured to determine a motion posture of the electronic device 100. In some embodiments, angular velocities of the electronic device 100 around three axes (namely, an x axis, a y axis, and a z axis) may be determined by using the gyroscope sensor 180B. The gyroscope sensor 180B may be configured to implement image stabilization during image capture. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may be further used in scenarios of navigation and a motion sensing game.

The acceleration sensor 180E may detect magnitudes of acceleration in various directions (usually on three axes) of the electronic device 100, and may detect a magnitude and a direction of gravity when the electronic device 100 is still, and may be further configured to identify a posture of the electronic device, and is applied to applications such as switching between a landscape mode and a portrait mode and a pedometer.

The touch sensor 180K is also referred to as a "touch panel". The touch sensor 180K may be disposed on the display 194. The touch sensor 180K and the display 194 constitute a touchscreen, which is also referred to as a "touch control screen". The touch sensor 180K is configured to detect a touch operation performed on or near the touch sensor. The touch sensor may transfer the detected touch operation to the application processor to determine a type of a touch event. A visual output related to the touch operation may be provided by using the display 194. In some other embodiments, the touch sensor 180K may alternatively be disposed on a surface of the electronic device 100, at a location different from that of the display 194.

In this embodiment of this application, the electronic device 100 may detect, by using the touch sensor 180K, an operation performed on a corresponding control in the display 194, and then executes a corresponding task in response to the operation.

The physical control key 190 includes a power-on key, a volume key, a rotation control (applied to a watch), and the like. The physical control 190 may be a mechanical key, or may be a touch key. The electronic device 100 may receive a key input and generate a key signal input related to user settings and function control of the electronic device 100.

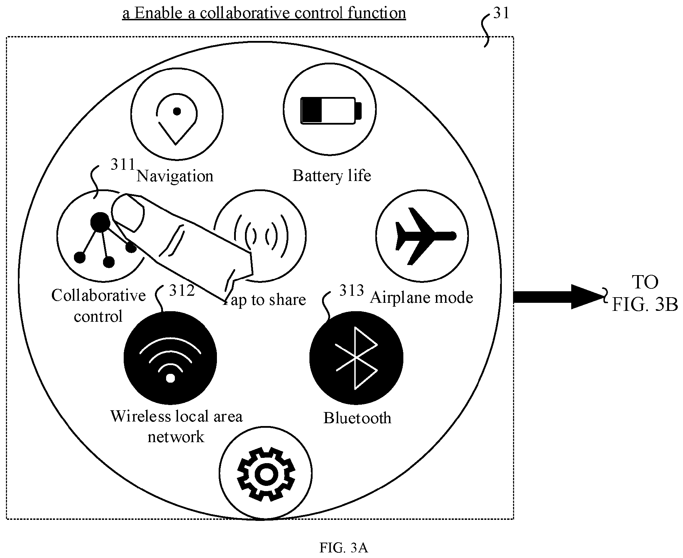

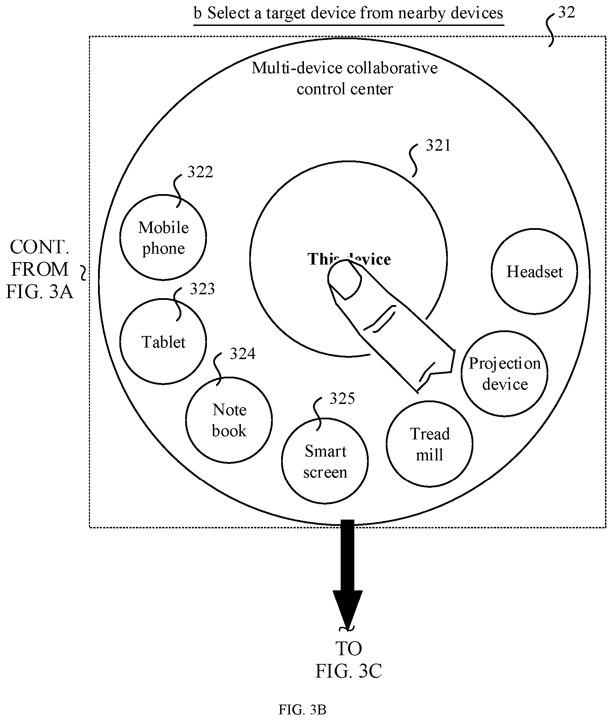

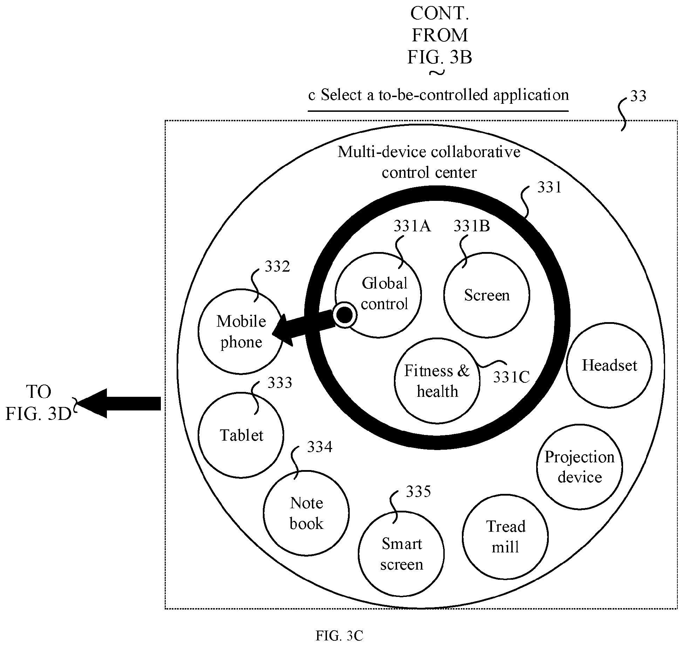

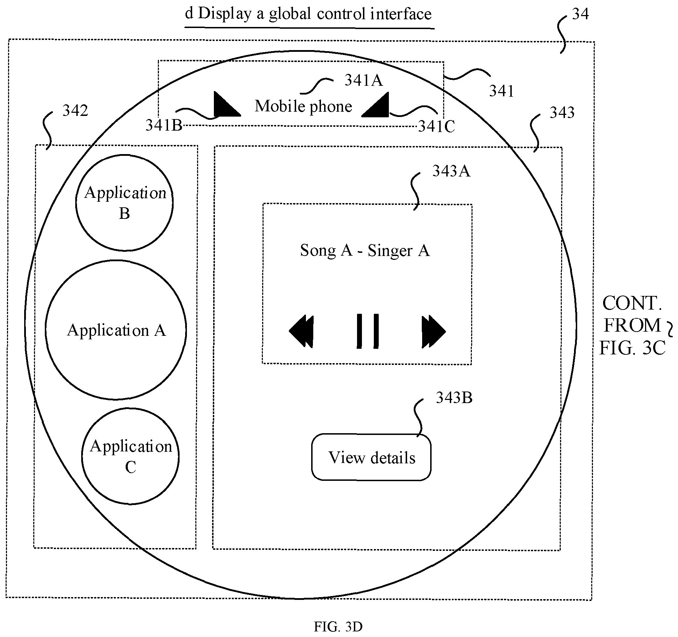

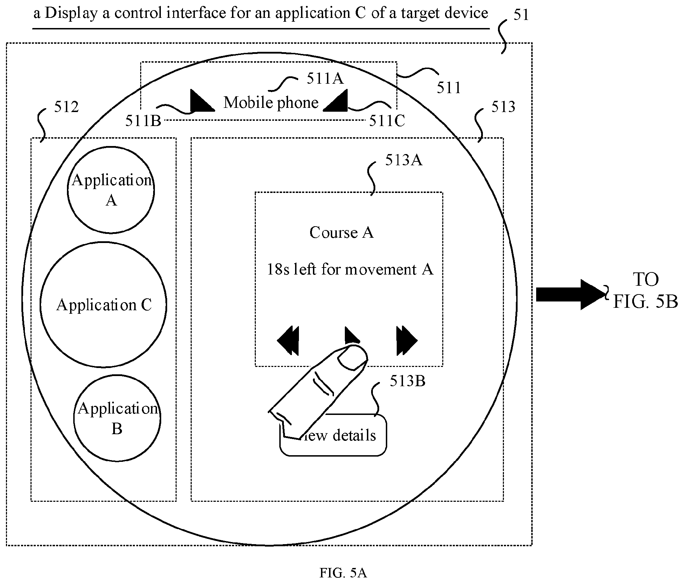

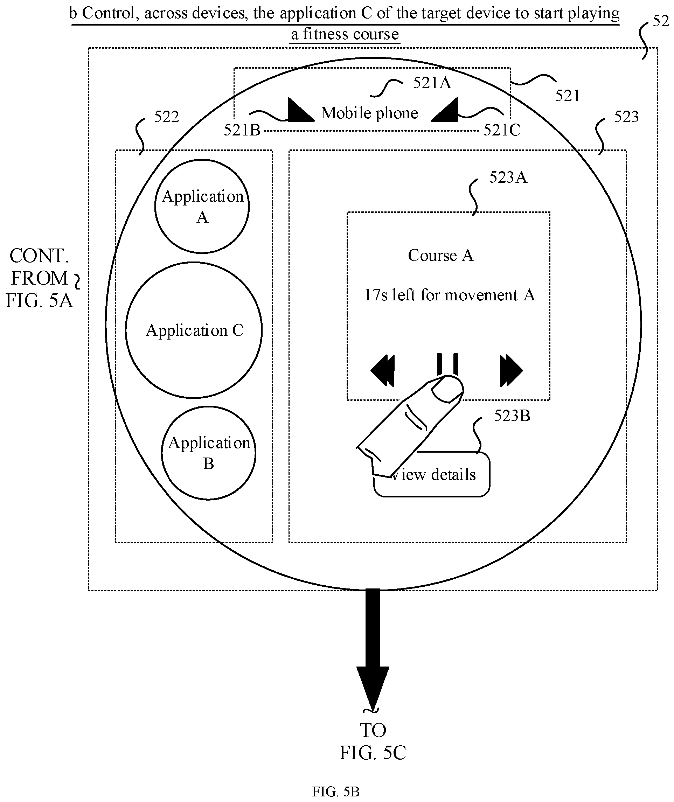

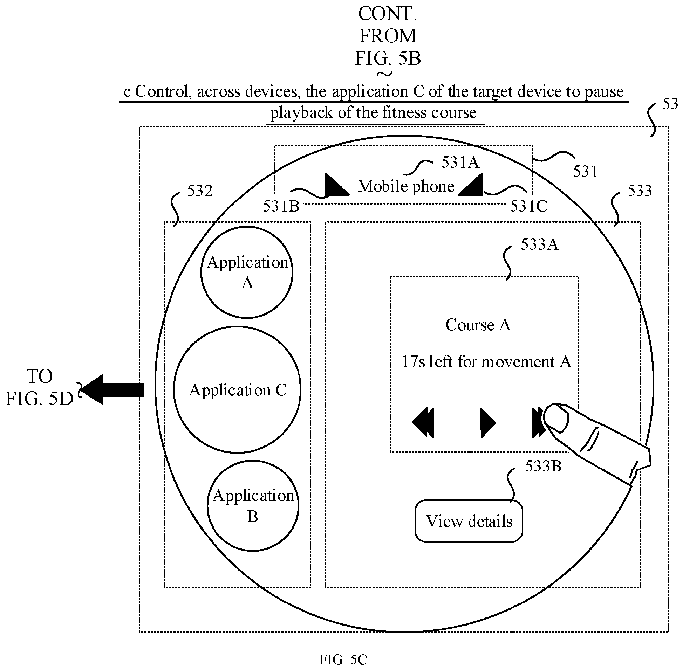

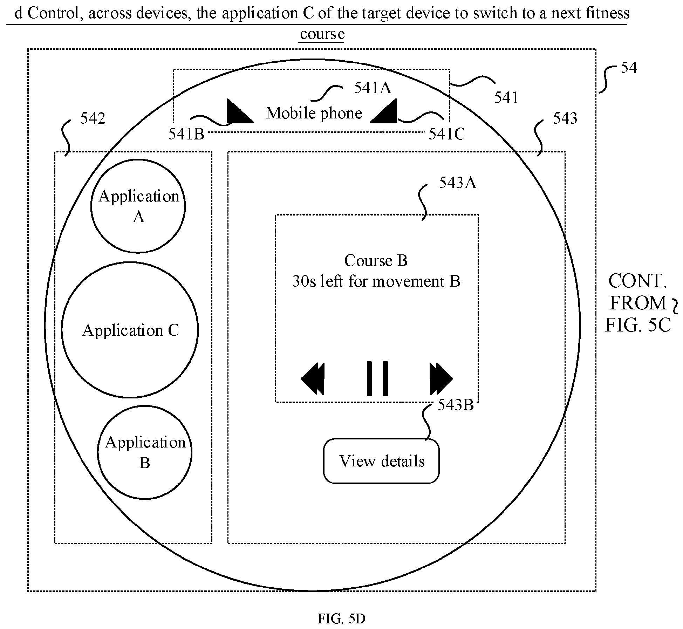

Based on the communication system 10 and the electronic device 100 described above, specific implementation of the multi-device collaborative control function provided in this application is described below with reference to FIG. 3 and FIG. 4, and how to apply the multi-device collaboration function in various scenarios is described with reference to FIG. 5 to FIG. 8.

**FIG. 3A****,** **FIG. 3B****,** **FIG. 3C****, and** **FIG. 3D** **are a schematic diagram of an example of a set of operation interfaces for enabling** a **multi-device collaborative control function in** a **first device.**

FIG. 3A shows a user interface 31 of the first device. The user interface 31 may be a setting interface of the first device, or a control center interface opened through a pull-down operation. The pull-down operation may be an operation that a user swipes down from the top of a dial. The user interface 31 includes but is not limited to an option 311 corresponding to a collaborative control function, an option 312 corresponding to a wireless local area network, an option 313 corresponding to Bluetooth, and the like.

While the first device displays FIG. 3A, the user may enable/disable a corresponding function by inputting an operation performed on each function option. For example, after the user taps the option 312 and the option 313, the first device enables functions such as a wireless local area network and Bluetooth, and further adjusts the option 312 and the option 313 to an enabled state as shown in FIG. 3A.

FIG. 3B shows a user interface 32 of the first device. The user interface 32 may be a detail page of the collaborative control function that is opened after the first device receives an operation performed on the option 311. The user interface 32 includes an identifier for the first device and identifiers for nearby devices. The identifier for the first device is an identifier 321 for this device, and the identifiers for the nearby devices are, for example, an identifier 322 for a mobile phone, an identifier 323 for a tablet, an identifier 324 for a notebook, an identifier 325 for a smart screen, and the like. The identifier 321 for this device may be displayed in a different form from the identifiers for the nearby devices. For example, a background fill color of the identifier for this device is extracted from a wallpaper of this device, and an area occupied by the identifier for this device on the display interface is greater than an area occupied by the identifier for the nearby device on the display interface. The identifier for the nearby device is queried by the first device based on a communication manner such as a WLAN, Bluetooth, NFC, QR code scanning, or a wired connection. The foregoing identifier for the device includes but is not limited to a device name, a device model, a device icon, or the like. FIG. 3A, FIG. 3B, FIG. 3C, and FIG. 3D only show a device name as an example of the identifier for the device. This is not limited in this embodiment of this application.

While the first device displays FIG. 3B, the user may tap the identifier 321 for this device to present premium services of this device, so as to support the user to subsequently drag a desired service to an identifier for a target device and release the service for cross-device transfer of the service.

FIG. 3C shows a user interface 33 of the first device. The user interface 33 may be another detail page of the collaborative control function that is opened after the first device receives an operation of tapping the identifier 321 for this device. The user interface 33 includes an identifier for the first device, namely an identifier 331 for this device, and the identifiers for the nearby devices are, for example, an identifier 332 for a mobile phone, an identifier 333 for a tablet, an identifier 334 for a notebook, an identifier 335 for a smart screen, and the like. Optionally, the identifier 331 for this device is displayed in a different form from the foregoing identifier 321 for this device. For example, an effect that matches an industrial design (Industrial design, ID) of this device may be displayed on the periphery of the identifier 331 for this device. In addition, the identifier 331 for this device further includes identifiers corresponding to the premium services in this device, for example, an identifier 331A for global control, an identifier 331B for fitness and health, or an identifier 331C for a screen. The foregoing premium service refers to a software/hardware functional module that is not included in another device, or a software/hardware functional module that can provide the user with a unique experience when running in the first device. Using global control as an example, the premium service may provide the user with centralized control entries to control other nearby devices to execute corresponding tasks; using fitness and health as an example, because the first device is provided with multiple sensors that fit the user's body, the premium service may provide the user with more accurate and comprehensive health data and share the health data with another nearby device; and using a screen as an example, because the first device is portable, and screen display information of another device is shared in the first device, the premium service may provide the user with an experience of conveniently viewing information on the another device; or because screen information of the first device is shared in another device, the premium service may provide the user with an experience of viewing information on the first device by using another device with a relatively large screen. Types and a quantity of premium services are not specifically limited in this embodiment of this application. Several examples are provided here for illustrative purposes only and should not constitute a limitation on this application.

In this embodiment of this application, the user interface 33 may also be referred to as a second interface.

While the first device displays FIG. 3C, the user may select an identifier for a target service from the identifiers for the premium services of the first device, drag the identifier for the target service to the identifier for the target device, and release the identifier for the target service, thereby triggering transfer of the service between the first device and the target device. In addition, at different processing stages, a position and a size of a hot zone in which the identifier for this device is located may change. For example, before the identifier 321 for this device shown in FIG. 3B is tapped, a hot zone in which the identifier 321 for this device is located is at the center of the interface, and has a relatively small size. After the identifier 321 for this device shown in FIG. 3B is tapped, the identifier 321 for this device becomes the identifier 331 for this device as shown in FIG. 3C. A size of a hot zone in which the identifier 331 for this device is located increases as the premium services are presented. After an identifier for a premium service shown in FIG. 3C is dragged, the size of the hot zone in which the identifier 331 for this device is located decreases as the premium service is removed. A size and a position of the hot zone in which the identifier for this device is located are not specifically limited in this embodiment of this application. A size and a position of the hot zone in which the identifier for this device is located are not specifically limited in this embodiment of this application.

FIG. 3D shows a user interface 34 of the first device. The user interface 34 may be a global control interface displayed after the first device receives an operation of dragging the identifier 331A for global control to the identifier 332 for the mobile phone and releasing the identifier 331A for global control. The user interface 34 includes but is not limited to a device switching region 341, an application switching region 342, an application control region 343, and the like.

The device switching region 341 displays an identifier 341A for a target device, and a control 341B and a control 341C for switching the target device. The identifier 341A for the target device is the identifier for the mobile phone previously selected in FIG. 3B. The control 341B and the control 341C can support a user tap, and in response to such a tap operation, the first device switches the target device from other nearby devices. Optionally, the device switching region 341 may also display identifiers for multiple devices. Only a device corresponding to an identifier in a selected state is the target device, and a device corresponding to an identifier in an unselected state is another device near the first device.

In addition, after the first device enables the collaborative control function, the first device may establish a connection with only the target device, or the first device may establish a connection with the target device and another nearby device that has served as a target device within preset duration. In this way, the target device can be quickly controlled to execute a cross-device task when the target device is subsequently switched from nearby devices.

The application switching region 342 displays identifiers for a group of applications. The identifiers for the group of applications are identifiers for one or more applications that are previously selected from identifiers for applications on the target device, including, for example, an identifier for an application A, an identifier for an application B, and an identifier for an application C. A quantity of applications and display forms of identifiers are not limited in this embodiment of this application, and identifiers for different applications change with characteristics of different applications. When a quantity of applications is greater than a preset quantity (for example, 3), the application switching region 342 displays identifiers for only three applications, and the user may switch to display identifiers for remaining non-displayed applications by swiping the application switching region, operating a physical control (for example, rotating a crown), or the like. An application corresponding to an identifier in a selected state in the application switching region 342 is a target application. The selected state may be specifically a state in which an icon size of the application becomes larger, a state of being in a central zone of the application switching region 342, or the like. A specific display form of the selected state is not limited in this application.

Optionally, after the first device selects the target device and before the target application is switched, the target application in the selected state may be any one or more of the following by default: an application that is currently running in the foreground of the target device, a historical application commonly used in a multi-device collaborative control scenario, an application first dragged from applications of the target device to a target region, or the like. This is not limited in this embodiment of this application. For example, if the target device is running the application A in the foreground to play music, the identifier for the application A is enlarged to be displayed in the central zone of the application switching region 342.

The application control region 343 displays a control panel for the target application. The control panel includes, for example, a running state 343A of the target application, a control 343B for viewing running details of the target application, and the like. Specifically, if the target device is currently running the application A and playing music provided by the application A, after the first device establishes a connection with the target device and selects the application A as the target application, the first device displays a control panel for the application A based on running data of the application A that is transmitted by the target device. It may be understood that content included in the control panel may vary with the target application. Using a music application as an example, a control panel for the music application includes but is not limited to a name of music being played and a name of a singer, a control for switching a song, a control for starting/stopping playback of a song, a control for viewing music details, and the like. If the user wants to control the application A to start/stop/switch the played song, the user may input an operation to a corresponding control in the application control region 343, so that the first device controls, across devices, the application A of the target device to start/stop/switch the played song. If the user wants to view running details of the application A, the user may input an operation to a corresponding control in the application control region 343, so that the first device displays detailed information such as words of a song played by the application A.

In this embodiment of this application, the user interface 34 and the following user interfaces shown in FIG. 4 to FIG. 8 each may be referred to as a global control interface or a first interface. In addition, in the first interface, a device switching region may also be referred to as a first region, an application switching region may also be referred to as a second region, and an application control region may also be referred to as a third region.

While the first device displays FIG. 3D, the user may perform global control on multiple devices, multiple applications, and multiple tasks by using the user interface 34. The global control includes but is not limited to: the user may switch a target device in the device switching region 341, switch a target application in the application switching region 342, and input a corresponding operation (also referred to as a fourth operation) into a control panel to control the first device to execute a task (also referred to as a first task) corresponding to the target application.

With reference to various application scenarios, the following describes in detail how to use a multi-device collaboration function through global control.

**Scenario 1: A user performs a housework activity by using a recipe application on a tablet.**

Specifically, when the user performs a housework activity such as cooking, the user may need to use a recipe application to provide guidance on how to cook, and may also need a music application to play music. Although it is very likely that it is inconvenient for the user to stop what he/she is doing to approach a target device and control the target device to play a recipe, music, or the like during cooking, a method for cross-device control of the tablet to play a recipe and control of a mobile phone to play music by using a multi-device collaborative control function of the first device enables the user to randomly control a corresponding electronic device to play a recipe, music, and the like during cooking, thereby ensuring that the user smoothly follows guidance of the recipe to cook.

**FIG. 4A****,** **FIG. 4B****,** **FIG. 4C****, and** **FIG. 4D** **are a schematic diagram of an example of a set of operation interfaces for using a multi-device collaboration function in a cooking scenario.**

FIG. 4A shows a user interface 41 in which a first device controls an application A in a target device 1 across devices. The user interface 41 includes a device switching region 411, an application switching region 412, and an application control region 413. The target device 1 is, for example, the foregoing mobile phone in FIG. 3, and the user interface 41 is similar to the user interface 34 in FIG. 3. For a specific implementation method in which the first device enables a multi-device collaborative control function, selects the target device 1, and controls, across devices, the target device 1 to play music, reference may be made to the foregoing descriptions of FIG. 3. An origin of the user interface 41 is not elaborated herein.

After the first device displays a control interface for the application A in the target device 1, that is, after the first device displays FIG. 4A, the first device may perform any one or more of the following:
(1) The first device may control a running state of the application A in the target device 1 across devices. For example, the target device 1 is controlled to stop/start/switch played music by operating a corresponding control in the application control region 413 in FIG. 4A.
(2) If a user wants to control, by using the first device, an application in another device to execute a task, the user may control, by using any one of the following operations, the first device to switch the target device 1 to a target device 2: an operation of tapping a control 411B or a control 411C in FIG. 4A, a left/right swipe operation performed on an identifier 411A, an operation of selecting the device switching region 411 and then operating a physical control of the first device (for example, rotating a crown of the first device), or the like. A trigger operation for controlling the first device to switch a target device is not specifically limited in this embodiment of this application.
(3) The user may view information shown in a running state 413A of a target application in the application control region 413, and the user may input a corresponding operation to a control 413B in the application control region 413 to control the first device to execute a task corresponding to the target application.

FIG. 4B to FIG. 4D show user interfaces in which the first device controls the target device 2 across devices. FIG. 4B shows an initial user interface 42 for global control performed after the first device switches from the target device 1 to the target device 2, FIG. 4C shows a user interface (a control interface) 43 in which the first device displays an application X in the target device 2, and FIG. 4D shows a user interface 44 in which the first device controls the application X in the target device 2 across devices. Details are as follows.

The user interface 42 shown in FIG. 4B is an interface displayed after the first device receives an operation for switching to the target device 2. The user interface 42 displays a device switching region 421, an application switching region 422, an application control region 423, and the like.

The device switching region 421 displays an identifier 421A for a target device, a control 421B for switching to a previous target device, and a control 421C for switching to a next target device. The identifier 421A for the target device is an identifier for the target device 2, for example, an identifier for a tablet. The control 421B and the control 421C can support a user tap, and in response to such a tap operation, the first device switches a target device from other nearby devices. For detailed descriptions of the device switching region 421, reference may be further made to the foregoing descriptions of the device switching region 341. Details are not described herein again.

The application switching region 422 displays identifiers for a group of applications, and the identifiers for the group of applications are identifiers corresponding to applications of the target device 2, including, for example, an identifier for an application X, an identifier for an application Y, and an identifier for an application Z. The application Y is a default target application. The identifiers for the group of applications may be selected by the user, or may be provided by default by the target device 2. The target device 2 may provide an identifier for an application by default based on any one or more of the following rules: an application that is currently running by the target device, an identifier for a commonly used historical application of the target device, an identifier for a historical application commonly used in a multi-device collaborative control scenario, an identifier for an application selected last time, or the like. For detailed descriptions of the application switching region 422, reference may be further made to the foregoing descriptions of the application switching region 342. Details are not described herein again.

The application control region 423 displays a control panel for a target application. The control panel includes, for example, a running state of the target application. If the target device 2 is not currently running the application Y, after the first device establishes a connection with the target device 2 and selects the application Y as a target application, the first device reminds the user whether to start the application Y in the target device 2 across devices. If the target device 2 is currently running the application Y, the first device directly displays a running state of the application Y and related controls rather than displaying information that reminds the user whether to start the application Y in the target device 2 across devices.

While the first device displays FIG. 4B, if the application X is not a recipe application, and the user wants to control another application to play a recipe, the user may input a swipe operation to the application switching region 422 to switch the target application from the application Y to the application X that can play the recipe.

The user interface 43 shown in FIG. 4C is a control interface for the application X that is displayed after the first device receives an operation of switching the target application from the application Y to the application X. The user interface 43 displays a device switching region 431, an application switching region 432, and an application control region 433.

Display content of an identifier 431A for a target device in the device switching region 431 is the same as that of the identifier 421A for the target device in the device switching region 421, that is, the target device is still the target device 2 (namely, the tablet). Controls 431B and 431C in the device switching region 431 have the same corresponding functions as the controls 421B and 421C in the device switching region 421.

A sequence of identifiers for applications in the application switching region 432 is different from that of identifiers for applications in the application switching region 422. Optionally, when a quantity of to-be-controlled target applications 2 is relatively large (for example, greater than 3), identifiers for applications in the application switching region 432 are alternatively different from the identifiers for the applications in the application switching region 422.

The application control region 433 displays different content from the application control region 423. The application control region 433 displays a control panel for the switched application X. If the target device 2 is currently running the application X and opening a recipe provided by the application X, after the first device establishes a connection with the target device 2 and selects the application X as the target application, the first device displays a control panel for the application X based on running data of the application X that is transmitted by the target device 2. It may be understood that content included in the control panel may vary with the target application. Using a recipe application as an example, a control panel for the recipe application includes but is not limited to a recipe summary 433A, and a control 433B for viewing recipe details.

After the first device displays the control interface for the application X in the target device 2, that is, after the first device displays FIG. 4C, the first device may execute any one or more of the following tasks (also referred to as first tasks) corresponding to the application X.
(1) If the user wants to control to view a detailed recipe provided by the application X, the user may tap the control 433B to trigger the first device to display the detailed recipe, where the detailed recipe is obtained by the first device from running data of the application X that is transmitted by the target device 2.
(2) If the user wants to control, by using the first device, the application X of the target device 2 to execute a task, the user may tap a corresponding control shown in the application control region 433 in FIG. 4C to control the target device 2 to stop/start/switch a played recipe, or the like. Alternatively, the user may further select the application control region 433 and then operate a physical control of the first device (for example, rotate and press a crown of the first device), to control the target device 2 to stop/start/switch a played recipe.

The user interface 44 shown in FIG. 4D is an interface displayed after the first device receives an operation for cross-device control of the application X of the target device 2 to play a recipe. The user interface 44 displays a device switching region 441, an application switching region 442, and an application control region 443.

Display content of an identifier 441A for a target device in the device switching region 441 is the same as that of the identifier 431A for the target device in the device switching region 431, that is, the target device is still the target device 2 (namely, the tablet). Controls 441B and 441C in the device switching region 441 have the same corresponding functions as the controls 431B and 431C in the device switching region 431.

Identifiers for applications in the application switching region 442 are the same as the identifiers for the applications in the application switching region 432.

The application control region 443 displays different content from the application control region 433. A recipe summary 443A in the application control region 443 displays a control panel for the application X in an updated running state. Specifically, if the target device 2 is currently starting to play a recipe provided by the application X, a playback state of the recipe displayed in the first device is switched from a previous stopped state to a playing state. A control 443B for viewing recipe details in the application control region 443 has the same function as the control 433B for viewing recipe details.

In the scenario shown in FIG. 4, the target device 1 may be further referred to as a second device, the target device 2 may be further referred to as a third device, and the operation for controlling the first device to switch the target device 1 to the target device 2 may be further referred to as a first operation. The application A may be further referred to as a first application, the application Y may be further referred to as a second application, the application X may be further referred to as a third application, and the operation for controlling the first device to switch the target application from the application Y to the application X may be further referred to as a second operation. The operation for controlling the first device to view the detailed recipe provided by the application X and the operation for controlling the first device to control, across devices, the application X in the target device 2 to execute a task may be further referred to as third operations.

**Scenario 2:** A **user performs** a **fitness activity by using** a **fitness application of** a **corresponding mobile phone.**

When a user performs a fitness activity by using a fitness application of a mobile phone, the user may need to pause/resume/switch a fitness course played by a target device. Although it is inconvenient for the user to stop current movements during the fitness activity to pick up and control the mobile phone to pause/resume/switch the played fitness course or the like, if the following method for cross-device control of a mobile phone by using a multi-device collaborative control function of a first device as described in this application is used, it is convenient for the user to freely control the mobile phone to play a fitness course, capture an image, and the like during the fitness activity, thereby ensuring that the user may smoothly follow guidance of the fitness course to complete movements.

FIG. 5A, FIG. **5B****,** FIG. 5C, **and** FIG. **5D** are a schematic diagram of an example of a set of **operation interfaces for using** a **multi-device collaboration function in** a **fitness scenario.**

FIG. 5A shows a user interface 51 (a control interface) in which a first device displays an application C in a target device. The user interface 51 may be an interface displayed after the first device enables a multi-device collaborative control function, sets the target device as a mobile phone and sets a target application as the application C. The user interface 51 may be an interface displayed after the first device displays the interface shown in FIG. 3D and receives an operation for switching the target application from an application A to an application C. For a specific implementation method for enabling the multi-device collaborative control function and setting the target device and the target application, reference may be made to the foregoing descriptions of setting the mobile phone/the tablet as the target device in FIG. 3 and FIG. 4, and setting the application A/the application X as the target application. Details are not described herein again.

The user interface 51 displays a device switching region 511, an application switching region 512, an application control region 513, and the like. The user interface 51 is similar to the user interface 34 in FIG. 3, a difference is that target applications are different, and the target application here is an application C of the mobile phone.

The device switching region 511 displays an identifier 511A for a target device, and a control 511B and a control 511C for switching the target device. For detailed descriptions of the device switching region 511, reference may be further made to the foregoing descriptions of the device switching region 341. Details are not described herein again.

The application switching region 512 displays identifiers for a group of applications, and the identifiers for the group of applications are identifiers corresponding to applications of the target device, including, for example, an identifier for an application A, an identifier for an application B, and an identifier for an application C. The application C is a target application, and the target application may be switched from the application A shown in FIG. 3D to the application C. For detailed descriptions of the application switching region 512, reference may be further made to the foregoing descriptions of the application switching region 342. Details are not described herein again.

The application control region 513 displays a control panel for the target application. The control panel includes, for example, a running state 513A of the target application and a control 513B for viewing details. In this case, the running state 513A of the target application is in a state of stopping playing a fitness course. For detailed descriptions of the device application control region 513, reference may be further made to the foregoing descriptions of the application control region 343. Details are not described herein again.

After the first device displays a control interface for the application C in the target device, that is, after the first device displays FIG. 5A, the first device may control a running state of the application C in the target device across devices, for example, the first device may control, across devices, the target device to stop/start/switch a played fitness course by operating a corresponding control in the application control region 513 in FIG. 5A.

A user interface 52 shown in FIG. 5B is an interface displayed after the first device receives an operation for cross-device control of the target device to play a fitness course. The operation for playing the fitness course may be an operation of tapping a control for playing a next page in the running state 513A shown in FIG. 5A, or may be an operation performed on a physical control (for example, rotate a crown) of the first device.

The user interface 52 displays a device switching region 521, an application switching region 522, an application control region 523, and the like.

Display content of an identifier 521A for a target device in the device switching region 521 is the same as that of the identifier 511A for the target device in the device switching region 511, that is, the target device is still the mobile phone. Controls 521B and 521C in the device switching region 521 have the same corresponding functions as the controls 511B and 511C in the device switching region 511.

Identifiers for applications in the application switching region 522 are the same as the identifiers for the applications in the application switching region 512.

The application control region 523 displays different content from the application control region 513. A specific difference includes: A running state 523A of a target application in the application control region 523 indicates that the target application is in a state of playing a fitness course, while the target application in the application control region 513 is in a state of stopping playing a fitness course. A control 523B for viewing details in the application control region 523 has the same function as the control 513B for viewing details.

When the first device continues to display the control interface for the application C of the target device, that is, after the interface shown in FIG. 5B is displayed, if the user wants to start/stop/switch playback of the fitness course, the user may input an operation to a corresponding control in the application control region 523, so that the first device controls, across devices, the application C of the target device to start/stop/switch playback of the fitness course.

A user interface 53 shown in FIG. 5C is an interface displayed after the first device receives an operation for pausing a played fitness course. The user interface 53 displays a device switching region 531, an application switching region 532, and an application control region 533.

Display content of an identifier 531A for a target device in the device switching region 531 is the same as that of the identifier 521A for the target device in the device switching region 521, that is, the target device is still the mobile phone. Controls 531B and 531C in the device switching region 531 have the same corresponding functions as the controls 521B and 521C in the device switching region 521.

Identifiers for applications in the application switching region 532 are the same as the identifiers for the applications in the application switching region 522.

The application control region 533 displays different content from the application control region 523. A specific difference includes: A running state 533A of a target application in the application control region 533 indicates that the target application is in a state of stopping playing a fitness course, while the target application in the application control region 523 is in a state of playing a fitness course. A control 533B for viewing details in the application control region 533 has the same function as the control 523B for viewing details.

When the first device continues to display the control interface for the application C of the target device, that is, after the interface shown in FIG. 5C is displayed, if the user wants to start/stop/switch playback of the fitness course, the user may input an operation to a corresponding control in the application control region 533, so that the first device controls, across devices, the application C of the target device to start/stop/switch playback of the fitness course.

A user interface 54 shown in FIG. 5D is an interface displayed after the first device receives an operation for switching a played fitness course. The user interface 54 displays a device switching region 541, an application switching region 542, and an application control region 543.

Display content of an identifier 541A for a target device in the device switching region 541 is the same as that of the identifier 531A for the target device in the device switching region 531, that is, the target device is still the mobile phone. Controls 541B and 541C in the device switching region 541 have the same corresponding functions as the controls 531B and 531C in the device switching region 531.

Identifiers for applications in the application switching region 542 are the same as the identifiers for the applications in the application switching region 532.

The application control region 543 displays different content from the application control region 533. A specific difference includes: A running state 543A of a target application in the application control region 543 indicates that the target application is in a state of providing a whole-body fat burning course, while the target application in the application control region 533 is in a state of providing a leg strength training course. A control 543B for viewing details in the application control region 543 has the same function as the control 533B for viewing details.

When the first device continues to display the control interface for the application C of the target device, that is, after the interface shown in FIG. 5D is displayed, if the user wants to start/stop/switch playback of the fitness course, the user may input an operation to a corresponding control in the application control region 543, so that the first device controls, across devices, the application C of the target device to start/stop/switch playback of the fitness course.

**Scenario 3: A user capture images by using a camera application in a tablet.**

Specifically, when a user captures images by using a camera application in a tablet, the user usually needs to make various poses. However, the user cannot touch the tablet to take a snapshot, start video recording, stop recording, or the like when making the poses. However, if the following method for cross-device control of a tablet by using a multi-device collaborative control function of a first device as described in this application is used, it is convenient for the user to freely control the tablet to capture images when the user makes poses. In this application, in addition to during making poses, the user may also freely control a corresponding electronic device to capture images if the user wants to take photos or record a video during cooking, exercising, or giving a presentation. Preferably, if the first device is a wearable device, the user may use the first device anywhere at any time without approaching the first device like interrupting image capture to approach a tablet.

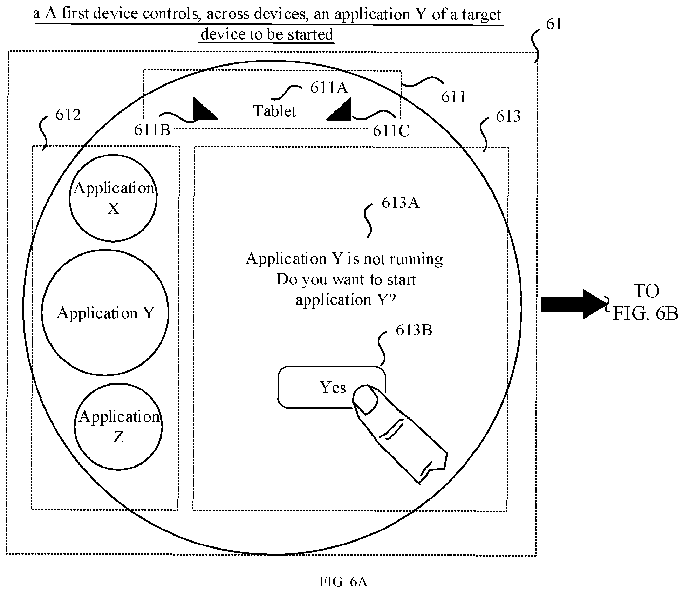

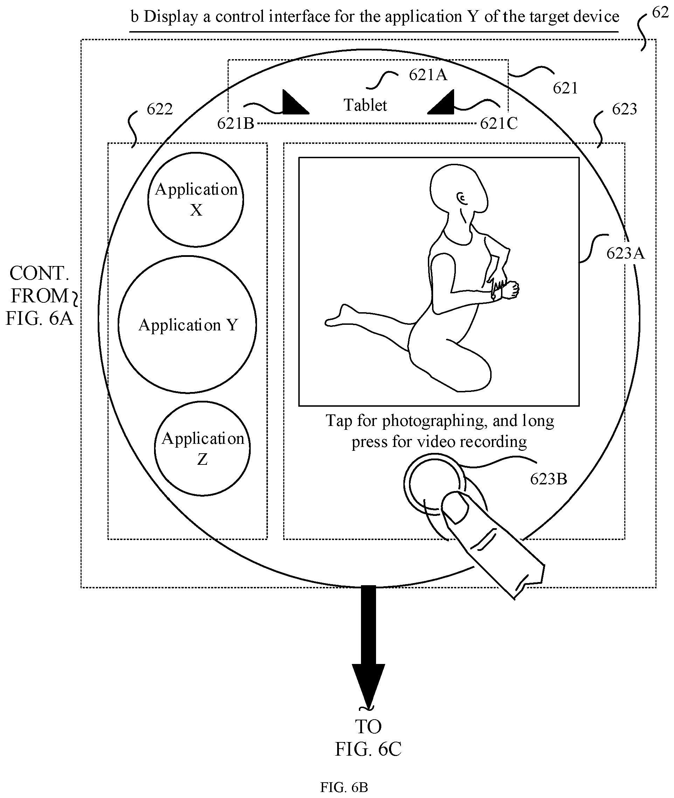

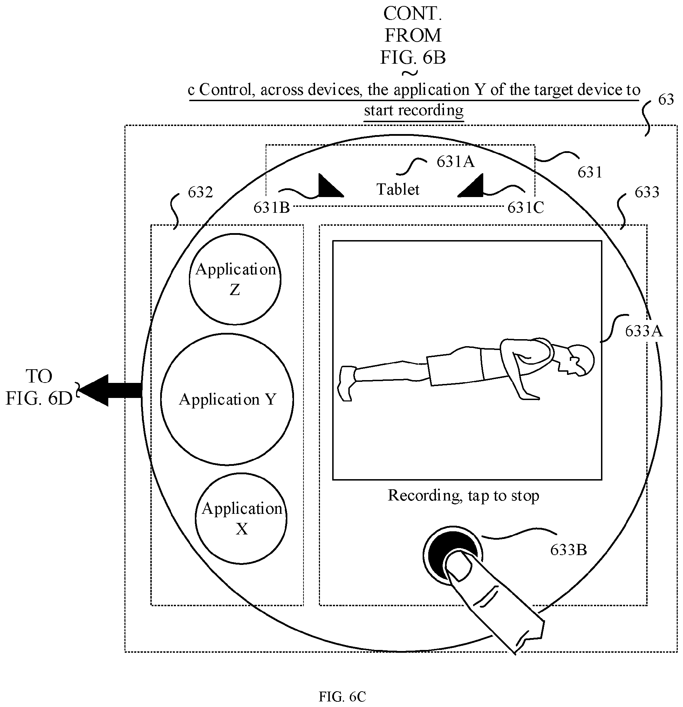

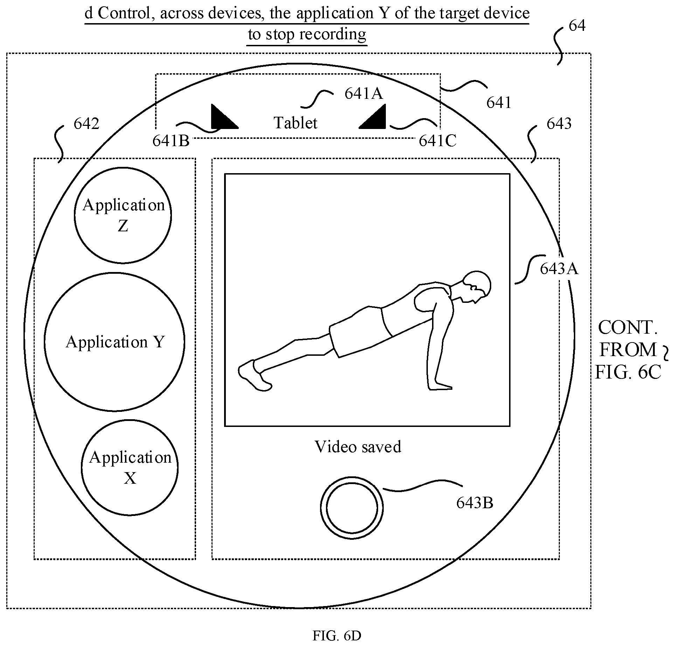

**FIG. 6A****,** **FIG. 6B****,** **FIG. 6C****, and** **FIG. 6D** **are a schematic diagram of an example of a set of operation interfaces for using a multi-device collaboration function in a camera scenario.**

FIG. 6A shows a user interface 61 in which a first device controls an application Y in a target device across devices. The user interface 61 may be an interface displayed after the first device enables a multi-device collaborative control function, sets the target device as a tablet and sets a target application as the application Y. For a specific implementation method for enabling the multi-device collaborative control function and setting the target device and the target application, reference may be made to the foregoing descriptions of setting the mobile phone/the tablet as the target device in FIG. 3 and FIG. 4, and setting the application A/the application X as the target application. Details are not described herein again.

The user interface 61 displays a device switching region 611, an application switching region 612, an application control region 613, and the like.

The device switching region 611 displays an identifier 611A for a target device, and a control 611B and a control 611C for switching the target device. For detailed descriptions of the device switching region 611, reference may be further made to the foregoing descriptions of the device switching region 341. Details are not described herein again.

The application switching region 612 displays identifiers for a group of applications, and the identifiers for the group of applications are identifiers corresponding to applications of the target device, including, for example, an identifier for an application X, an identifier for an application Y, and an identifier for an application Z. The application Y is a target application, and the target application may be set by default by the first device or selected by a user. For detailed descriptions of the application switching region 612, reference may be further made to the foregoing descriptions of the application switching region 342. Details are not described herein again.

The application control region 613 displays a control panel for the target application. The control panel includes, for example, a running state 613A of the target application, and the running state 613A of the target application is, for example, in a paused and non-running state. When the target application is not running, the application control region 613 further displays a control 613B for controlling the target device to start the application Y.

When the first device displays FIG. 6A, the first device may control a running state of the application Y in the target device across devices. For example, the first device may control, across devices, the target device to start the application Y by operating the control 613B in the application control region 613 in FIG. 6A.

A user interface 62 shown in FIG. 6B is an interface displayed after the first device receives an operation for cross-device control of the target device to start the application Y. The user interface 62 displays a device switching region 621, an application switching region 622, an application control region 623, and the like.

Display content of an identifier 621A for a target device in the device switching region 621 is the same as that of the identifier 611A for the target device in the device switching region 611, that is, the target device is still the tablet. Controls 621B and 621C in the device switching region 621 have the same corresponding functions as the controls 611B and 611C in the device switching region 611.

Identifiers for applications in the application switching region 622 are the same as the identifiers for the applications in the application switching region 612.

The application control region 623 displays different content from the application control region 613. A specific difference includes: A target application in the application control region 623 is in a started state, while a target application in the application control region 613 is in a non-started state. In addition, the application control region 623 further displays running state information 623A of the application Y and a control 623B that controls a running state of the application Y, where the running state information 623A includes, for example, a preview interface for the application Y in the target device, and the control 623B may be configured to control the application Y in the target device to take photos or record a video.

After the first device continues to display the control interface for the application Y of the target device, that is, after the first device displays FIG. 6B, if the user wants to start/stop photographing or video recording, the user may input an operation to a corresponding control in the application control region 623, so that the first device controls, across devices, the application Y of the target device to start/stop photographing or video recording.

A user interface 63 shown in FIG. 6C is an interface displayed after the first device receives an operation for recording videos (that is, long-pressing the control 623B for preset duration such as 1s). The user interface 63 displays a device switching region 631, an application switching region 632, and an application control region 633.

Display content of an identifier 631A for a target device in the device switching region 631 is the same as that of the identifier 621A for the target device in the device switching region 621, that is, the target device is still the tablet. Controls 631B and 631C in the device switching region 631 have the same corresponding functions as the controls 621B and 621C in the device switching region 621.

Identifiers for applications in the application switching region 632 are the same as the identifiers for the applications in the application switching region 622.

The application control region 633 displays different content from the application control region 623. A specific difference includes: Running state information 633A of the application Y in the application control region 633 indicates that the target application is in a state of starting video recording, while the target application in the application control region 623 is in a preview state.

After the first device continues to display the control interface for the application Y of the target device, if the user wants to stop video recording, the user may input a tap operation to the control 633B in the application control region 633, so that the first device controls, across devices, the application Y of the target device to end video recording.

A user interface 64 shown in FIG. 6D is an interface displayed after the first device receives an operation for stopping video recording. The user interface 64 displays a device switching region 641, an application switching region 642, and an application control region 643.

Display content of an identifier 641A for a target device in the device switching region 641 is the same as that of the identifier 631A for the target device in the device switching region 631, that is, the target device is still the tablet. Controls 641B and 641C in the device switching region 641 have the same corresponding functions as the controls 631B and 631C in the device switching region 631.

Identifiers for applications in the application switching region 642 are the same as the identifiers for the applications in the application switching region 632.

The application control region 643 displays different content from the application control region 633. A specific difference includes: A target application in the application control region 643 is in a state of ending video recording, while the target application in the application control region 633 is in a state of recording videos.

When the first device continues to display the control interface for the application Y of the target device, if the user wants to start/stop photographing and video recording, the user may input an operation to the control 643B in the application control region 643, so that the first device controls, across devices, the application Y of the target device to start/stop photographing and video recording, and correspondingly, a running state 643A of the target application indicates that the state is also a state of stopping video recording.

**Scenario 4: A user performs screen mirroring and gives a presentation by using a screen mirroring function of a notebook.**

Specifically, when a user uses a notebook to project onto a screen mirroring device for a presentation activity, the user usually needs to approach the notebook throughout the process and then operate a corresponding control of the notebook, in order to control to stop/resume playback of a document presented by the screen mirroring device, play a next page, or the like. However, if the following method for cross-device control of a notebook by using a multi-device collaborative control function of a first device as described in this application is used, it is convenient for the user to freely control the notebook to turn a page even when the user is far away from the notebook (for example, during off-stage interaction). Preferably, if the first device is a wearable device, the user may use the first device anywhere at any time without approaching the first device like approaching a notebook.

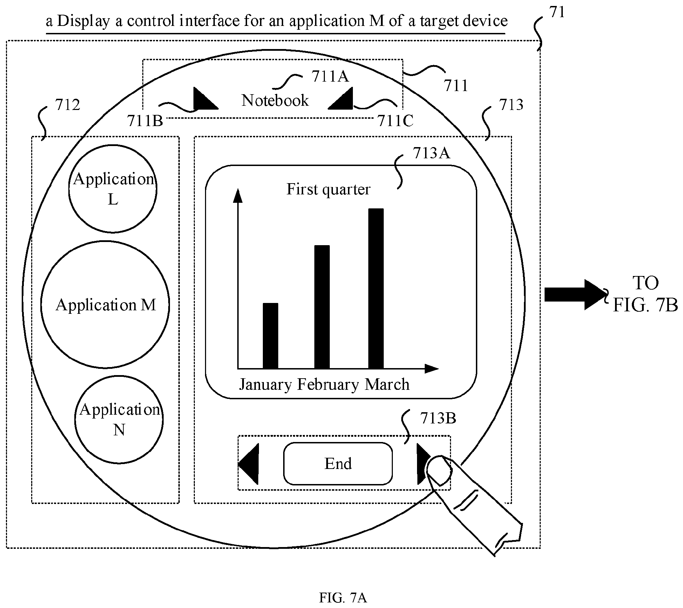

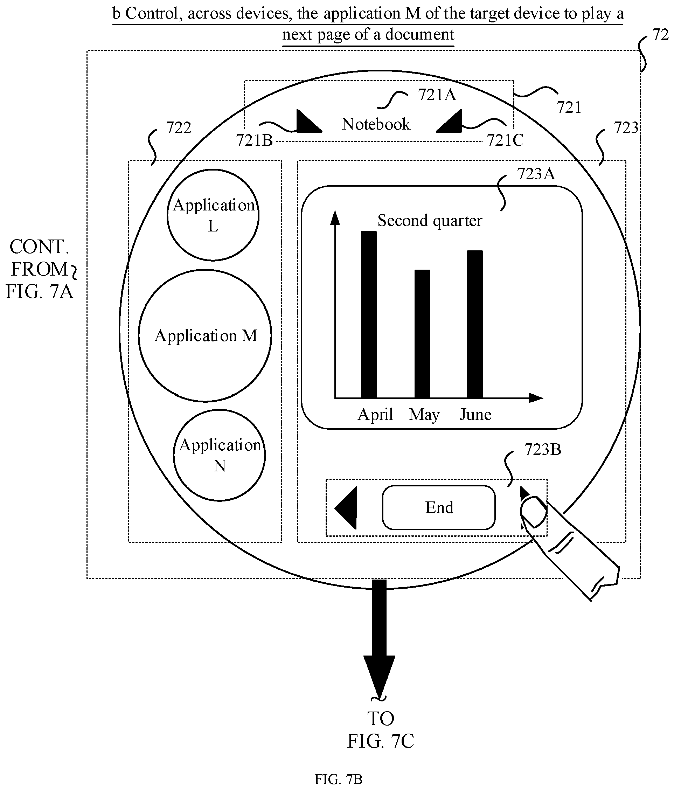

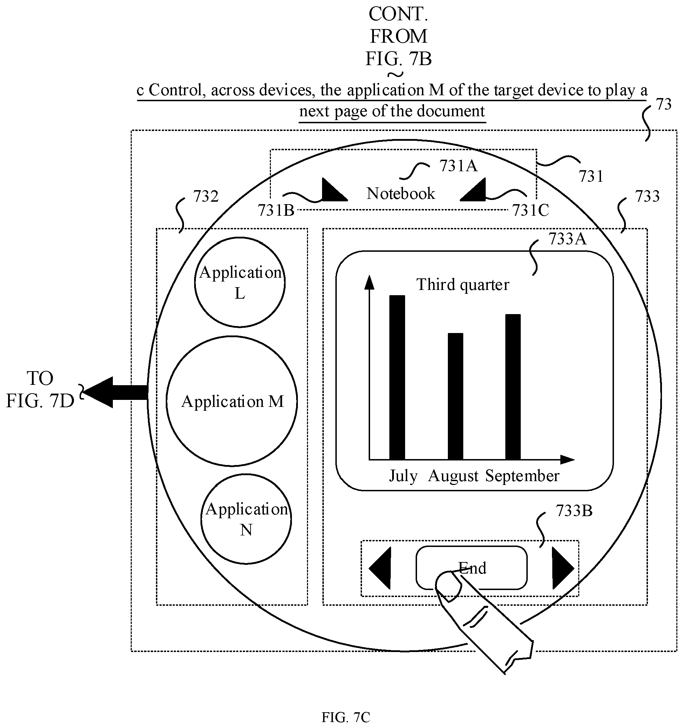

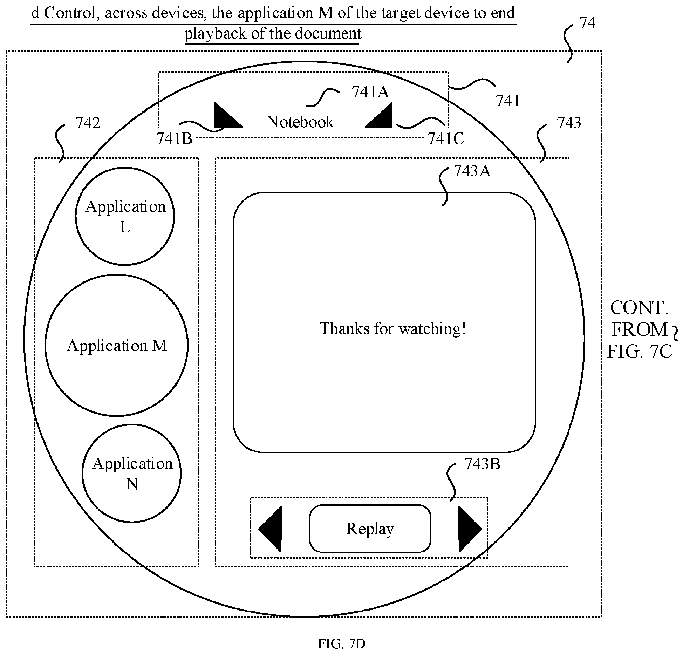

**FIG. 7A****,** **FIG. 7B****,** **FIG. 7C****, and** **FIG. 7D** **are a schematic diagram of an example of a set of operation interfaces for using** a **multi-device collaboration function in** a **screen mirroring presentation** scenario.

FIG. 7A shows a user interface 71 (a control interface) in which a first device displays an application M in a target device. The user interface 71 may be an interface displayed after the first device enables a multi-device collaborative control function, sets the target device as a notebook and sets a target application as the application M. For a specific implementation method for enabling the multi-device collaborative control function and setting the target device and the target application, reference may be made to the foregoing descriptions of setting the mobile phone/the tablet as the target device in FIG. 3 and FIG. 4, and setting the application A/the application X as the target application. Details are not described herein again.

The user interface 71 displays a device switching region 711, an application switching region 712, an application control region 713, and the like.

The device switching region 711 displays an identifier 711A for a target device, and a control 711B and a control 711C for switching the target device. For detailed descriptions of the device switching region 711, reference may be further made to the foregoing descriptions of the device switching region 341. Details are not described herein again.

The application switching region 712 displays identifiers for a group of applications, and the identifiers for the group of applications are identifiers corresponding to applications of the target device, including, for example, an identifier for an application L, an identifier for an application M, and an identifier for an application N. The application M is a target application, and the target application may be set by default by the first device or selected by a user. For detailed descriptions of the application switching region 712, reference may be further made to the foregoing descriptions of the application switching region 342. Details are not described herein again.

The application control region 713 displays a control panel for the target application. The control panel includes, for example, a running state 713A of the target application, and a control 713B. The running state 713A of the target application is, for example, in a state of presenting a first quarter report, and the control 713B includes but is not limited to a control for presenting a next page/a previous page of a document, and a control for ending playback. In addition, the target device further projects a presentation document of the target application onto the screen mirroring device for display.

When the first device displays FIG. 7A, the first device may control a running state of the application M in the target device across devices. For example, the first device may control, across devices, the target device to play a next page/a previous page of the document or end playing the document by operating the control 713B in the application control region 713 in FIG. 7A, so that a screen mirroring device end of the target device also plays the next page/the previous page of the document or ends playing the document.

A user interface 72 shown in FIG. 7B is an interface displayed after the first device receives an operation for cross-device control of the target device to play a next page of the document. The operation for playing a next page of the document may be an operation of tapping a control for playing a next page in the control 713B shown in FIG. 7A, or may be an operation performed on a physical control (for example, rotate a crown) of the first device.

The user interface 72 displays a device switching region 721, an application switching region 722, an application control region 723, and the like.

Display content of an identifier 721A for a target device in the device switching region 721 is the same as that of the identifier 711A for the target device in the device switching region 711, that is, the target device is still the notebook. Controls 721B and 721C in the device switching region 721 have the same corresponding functions as the controls 711B and 711C in the device switching region 711.

Identifiers for applications in the application switching region 722 are the same as the identifiers for the applications in the application switching region 712.

The application control region 723 displays different content from the application control region 713. A specific difference includes: A running state 723A of the target application is, for example, that document content presented by the target application is a second quarter report, while the running state 713A of the target application in the application control region 713 is, for example, that document content presented by the target application is the first quarter report.

When the first device continues to display the control interface for the application M of the target device, that is, after the first device displays FIG. 7B, if the user wants to continue to switch a next page/a previous page or end playback, this may be achieved by operating a corresponding control in a control 723B.

A user interface 73 shown in FIG. 7C is an interface displayed after the first device receives an operation for cross-device control of the target device to play a next page of the document. The operation for playing a next page of the document may be an operation of tapping a control for playing a next page in the control 723B shown in FIG. 7B, or may be an operation performed on a physical control (for example, rotate a crown) of the first device.

The user interface 73 displays a device switching region 731, an application switching region 732, and an application control region 733.

Display content of an identifier 731A for a target device in the device switching region 731 is the same as that of the identifier 721A for the target device in the device switching region 721, that is, the target device is still the notebook. Controls 731B and 731C in the device switching region 731 have the same corresponding functions as the controls 721B and 721C in the device switching region 721.

Identifiers for applications in the application switching region 732 are the same as the identifiers for the applications in the application switching region 722.

The application control region 733 displays different content from the application control region 723. A specific difference includes: A running state 733A of a target application in the application control region 733 is, for example, that document content presented by the target application is a third quarter report, while the document content presented by the target application in the application control region 723 is the second quarter report.

After the first device continues to display the control interface for the application M of the target device, that is, after the first device displays FIG. 7C, if the user wants to continue to switch a next page/a previous page or end playback, this may be achieved by operating a corresponding control in a control 733B.

A user interface 74 shown in FIG. 7D is an interface displayed after the first device receives an operation for ending playback of the document. The operation for ending playback may be an operation of tapping a control for playing a next page in the control 733B shown in FIG. 7C, or may be an operation performed on a physical control (for example, a button) of the first device.

The user interface 74 displays a device switching region 741, an application switching region 742, and an application control region 743.

Display content of an identifier 741A for a target device in the device switching region 741 is the same as that of the identifier 731A for the target device in the device switching region 731, that is, the target device is still the notebook. Controls 741B and 741C in the device switching region 741 have the same corresponding functions as the controls 731B and 731C in the device switching region 731.

Identifiers for applications in the application switching region 742 are the same as the identifiers for the applications in the application switching region 732.

The application control region 743 displays different content from the application control region 733. A specific difference includes: A running state 743A of a target application in the application control region 743 is, for example, that document content presented by the target application is "Thanks for watching", while the document content presented by the target application in the application control region 733 is the third quarter report.

When the first device continues to display the control interface for the application M of the target device, that is, after the first device displays FIG. 7D, if the user wants to continue to switch a next page/a previous page or replay, this may be achieved by operating a corresponding control in a control 743B.

**Scenario 5: A user watches a movie by using a video application in a smart screen.**

Specifically, when a user watches a movie by using a video application in a smart screen, the user usually needs to use a remote control to control the smart screen to switch a movie, adjust playback progress or playback volume of the movie, or the like. However, if the following method for cross-device control of a smart screen by using a multi-device collaborative control function of a first device as described in this application is used, it is convenient for the user to quickly switch a movie in the smart screen, adjust playback progress or playback volume of the movie, or the like, thereby preventing the user from having to interrupt movie-watching to look for a remote control. Preferably, if the first device is a wearable device, the user may use the first device anywhere at any time without looking for the first device like looking for a remote control.

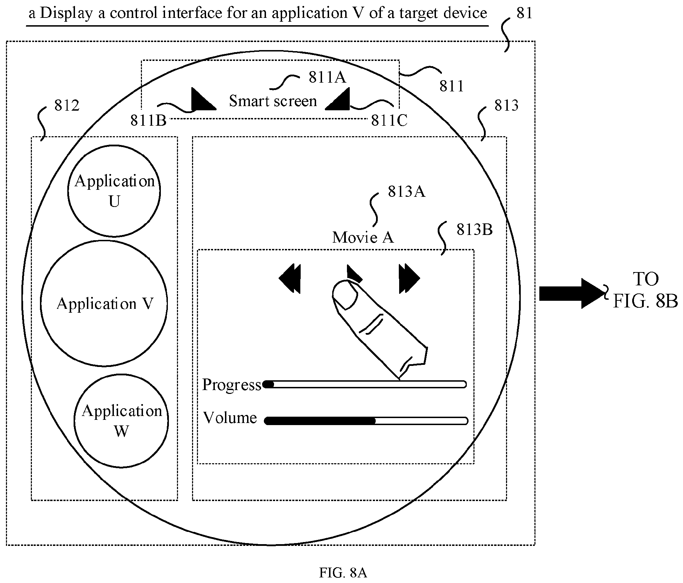

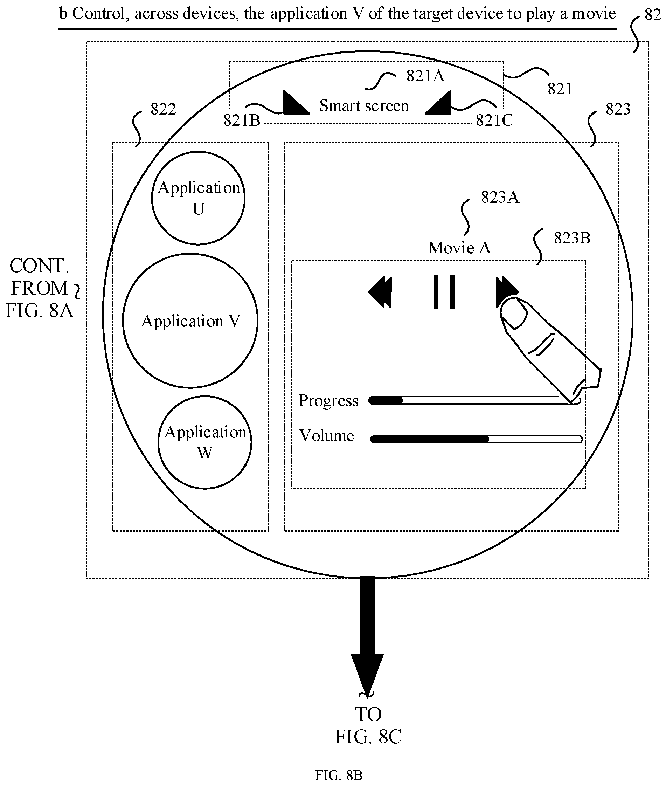

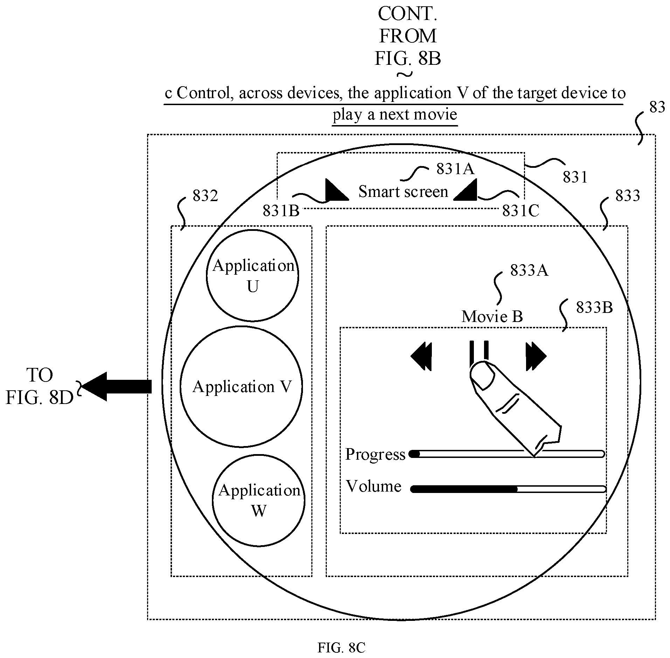

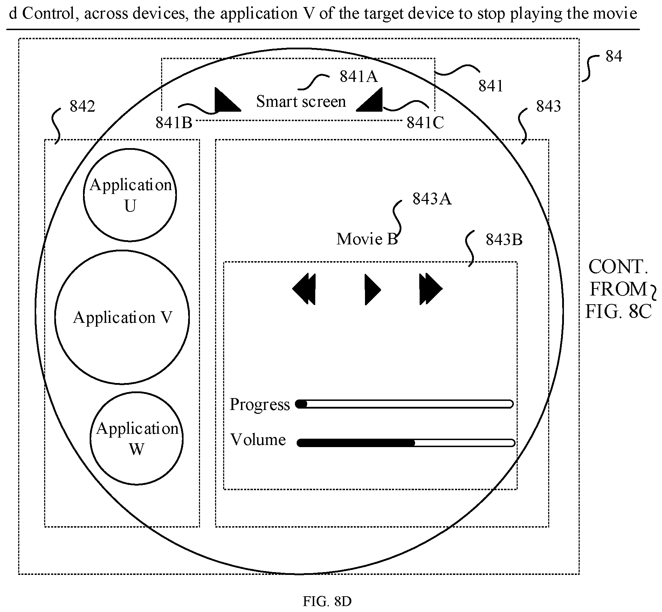

**FIG. 8A****,** **FIG. 8B****,** **FIG. 8C****, and** **FIG. 8D** **are a schematic diagram of an example of a set of operation interfaces for using** a **multi-device collaboration function in** a **movie-watching scenario.**

FIG. 8A shows a user interface 81 (a control interface) in which a first device displays an application V in a target device. The user interface 81 may be an interface displayed after the first device enables a multi-device collaborative control function, sets the target device as a smart screen and sets a target application as the application V. For a specific implementation method for enabling the multi-device collaborative control function and setting the target device and the target application, reference may be made to the foregoing descriptions of setting the mobile phone/the tablet as the target device in FIG. 3 and FIG. 4, and setting the application A/the application X as the target application. Details are not described herein again.

The user interface 81 displays a device switching region 811, an application switching region 812, an application control region 813, and the like.

The device switching region 811 displays an identifier 811A for a target device, and a control 811B and a control 811C for switching the target device. For detailed descriptions of the device switching region 811, reference may be further made to the foregoing descriptions of the device switching region 341. Details are not described herein again.

The application switching region 812 displays identifiers for a group of applications, and the identifiers for the group of applications are identifiers corresponding to applications of the target device, including, for example, an identifier for an application U, an identifier for an application V, and an identifier for an application W. The application V is a target application, and the target application may be set by default by the first device or selected by a user. For detailed descriptions of the application switching region 812, reference may be further made to the foregoing descriptions of the application switching region 342. Details are not described herein again.

The application control region 813 displays a control panel for the target application. The control panel includes, for example, a running state 813A of the target application, and a control 813B. The running state 813A of the target application is, for example, a state of stopping playback of a movie "movie B", and the control 813B includes but is not limited to a control for switching a next movie/a previous movie, a control for pausing/resuming playback of the movie, a control for adjusting playback progress, a control for adjusting playback volume, or the like.

When the first device displays FIG. 8A, the first device may control a running state of the application V in the target device across devices, for example, the first device may control, across devices, the target device to switch a next movie/a previous movie, pause/resume playback of a movie, adjust playback progress, adjust playback volume, or the like by operating a corresponding control in the control 813B.

A user interface 82 shown in FIG. 8B is an interface displayed after the first device receives an operation for cross-device control of the target device to play a movie. The operation for playing the movie may be an operation of tapping a control for playing a movie in the control 813B shown in FIG. 8A, or may be an operation performed on a physical control (for example, a button) of the first device.

The user interface 82 displays a device switching region 821, an application switching region 822, an application control region 823, and the like.

Display content of an identifier 821A for a target device in the device switching region 821 is the same as that of the identifier 811A for the target device in the device switching region 811, that is, the target device is still the smart screen. Controls 821B and 821C in the device switching region 821 have the same corresponding functions as the controls 811B and 811C in the device switching region 811.

Identifiers for applications in the application switching region 822 are the same as the identifiers for the applications in the application switching region 812.

The application control region 823 displays different content from the application control region 813. A specific difference includes: A running state 823A of the target application is, for example, a state of playing the movie "movie B", while the running state 813A of the target application is, for example, a state of stopping playback of the movie "movie B".

When the first device continues to display the control interface for the application V of the target device, that is, after the first device displays FIG. 8B, if the user wants to continue to switch a next movie/a previous movie, pause/resume playback of a movie, adjust playback progress, adjust playback volume, or the like, this may be achieved by operating a corresponding control in a control 823B.

A user interface 83 shown in FIG. 8C is an interface displayed after the first device receives an operation for cross-device control of the target device to play a next movie. The operation for switching a next movie may be an operation of tapping a control for switching a next movie in the control 823B shown in FIG. 8B, or may be an operation performed on a physical control (for example, a crown) of the first device.

The user interface 83 displays a device switching region 831, an application switching region 832, and an application control region 833.

Display content of an identifier 831A for a target device in the device switching region 831 is the same as that of the identifier 821A for the target device in the device switching region 821, that is, the target device is still the smart screen. Controls 831B and 831C in the device switching region 831 have the same corresponding functions as the controls 821B and 821C in the device switching region 821.

Identifiers for applications in the application switching region 832 are the same as the identifiers for the applications in the application switching region 822.

The application control region 833 displays different content from the application control region 823. A specific difference includes: A running state 833A of the target application is, for example, a state of playing the movie "movie B", while the running state 823A of the target application is, for example, a state of playing a movie "movie A".

When the first device continues to display the control interface for the application V of the target device, that is, after the first device displays FIG. 8C, if the user wants to continue to switch a next movie/a previous movie, pause/resume playback of a movie, adjust playback progress, adjust playback volume, or the like, this may be achieved by operating a corresponding control in a control 833B.

A user interface 84 shown in FIG. 8D is an interface displayed after the first device receives an operation for cross-device control of the target device to stop playback of a movie. The operation for stopping playback of the movie may be an operation of tapping a control for stopping playback of a movie in the control 833B shown in FIG. 8C, or may be an operation performed on a physical control (for example, a button) of the first device.

The user interface 84 displays a device switching region 841, an application switching region 842, and an application control region 843.

Display content of an identifier 841A for a target device in the device switching region 841 is the same as that of the identifier 831A for the target device in the device switching region 831, that is, the target device is still the smart screen. Controls 841B and 841C in the device switching region 841 have the same corresponding functions as the controls 831B and 831C in the device switching region 831.

Identifiers for applications in the application switching region 842 are the same as the identifiers for the applications in the application switching region 832.

The application control region 843 displays different content from the application control region 833. A specific difference includes: A running state 843A of the target application is, for example, a state of stopping playback of the movie "movie A", while the running state 833A of the target application is, for example, a state of playing the movie "movie A".

When the first device continues to display the control interface for the application V of the target device, that is, after the first device displays FIG. 8D, if the user wants to continue to switch a next movie/a previous movie, pause/resume playback of a movie, adjust playback progress, adjust playback volume, or the like, this may be achieved by operating a corresponding control in a control 843B.

In the foregoing UI embodiments shown in FIG. 3 to FIG. 8, only several common application scenarios are used as examples to describe the multi-device collaborative control method provided in this application. In different scenarios, the global control interface displayed by the first device may be different, for example, an identifier for an application in the application switching region in the global control interface may be displayed in different forms, display of application states in the application control region is different, and types of related controls are different, which may be specifically adapted to characteristics of the target application. All examples are not provided here in this application. Based on the UI embodiments shown in FIG. 3 to FIG. 8 as described above, it may be learned that after the multi-device collaborative control method, the graphical interface, and the electronic device provided in this application are applied, a user may quickly and conveniently switch a to-be-controlled target device and a to-be-controlled target application, and control execution of a task related to the target application by using a global control interface in various scenarios, especially in a scenario in which multiple devices and multiple applications collaborate to execute a task. Thanks to centralized control entries, operation of the user is further simplified and interaction experience is improved.

It should be understood that the steps of the foregoing method embodiment provided in this application may be implemented by using a hardware integrated logic circuit in the processor or implemented by using instructions in a software form. The steps of the method disclosed with reference to the embodiments of this application may be directly performed by a hardware processor, or by a combination of hardware in the processor and a software module.

This application further provides an electronic device, and the electronic device may include a memory and a processor. The memory may be configured to store a computer program, and the processor may be configured to invoke the computer program in the memory to cause the electronic device to perform the method in any one of the foregoing embodiments.

This application further provides a chip system. The chip system includes at least one processor configured to implement the functions involved in the method performed by the electronic device in any one of the foregoing embodiments.

In a possible design, the chip system further includes a memory. The memory is configured to store program instructions and data. The memory is located inside the processor or outside the processor.

The chip system may include a chip, or may include a chip and another discrete device.

Optionally, the chip system may include one or more processors. The processor may be implemented by using hardware or by using software. When implemented by using hardware, the processor may be a logic circuit, an integrated circuit, or the like. When implemented by using software, the processor may be a general-purpose processor and be implemented by reading software code stored in the memory.

Optionally, the chip system may also include one or more memories. The memory may be integrated with the processor, or may be separated from the processor. This is not limited in embodiments of this application. For example, the memory may be a non-transitory memory such as a read-only memory ROM, and the memory and the processor may be integrated on a same chip, or may be respectively arranged on different chips. A type of the memory and a manner of disposing the memory and the processor are not limited in embodiments of this application.

For example, the chip system may be a field programmable gate array (field programmable gate array, FPGA), an application specific integrated circuit (application specific integrated circuit, ASIC), a system on chip (system on chip, SoC), a central processing unit (central processor unit, CPU), a network processor (network processor, NP), a digital signal processing circuit (digital signal processor, DSP), a micro controller unit (micro controller unit, MCU), a programmable controller (programmable logic device, PLD), or another integrated chip.

This application further provides a computer program product, and the computer program product includes a computer program (which may also be referred to as code or an instruction). When the computer program is run, a computer is caused to perform the method performed by the electronic device in any one of the foregoing embodiments.

This application further provides a computer-readable storage medium. The computer-readable storage medium stores a computer program (also referred to as code or an instruction). When the computer program is run, a computer is enabled to perform the method performed by the electronic device in any one of the foregoing embodiments.

The various implementations of this application may be arbitrarily combined to achieve different technical effects.

All or some of the foregoing embodiments may be implemented by using software, hardware, firmware, or any combination thereof. When the software is used for implementation, some or all of the embodiments may be implemented in a form of a computer program product. The computer program product includes one or more computer instructions. When the computer program instructions are loaded and executed on a computer, all or some of the procedures or functions according to this application are generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired manner (for example, a coaxial cable, an optical fiber, or a digital subscriber line) or a wireless manner (for example, infrared, wireless, or microwave). The computer-readable storage medium may be any usable medium accessible by the computer, or a data storage device, such as a server or a data center, integrating one or more usable media. The usable medium may be a magnetic medium (for example, a floppy disk, a hard disk, or magnetic tape), an optical medium (for example, a DVD), a semiconductor medium (for example, a solid state disk Solid State Disk), or the like.

A person of ordinary skill in the art may understand that all or some of the procedures of the methods in the foregoing embodiments are implemented. The procedures may be completed by a computer program instructing related hardware. The program may be stored in a computer-readable storage medium. When the program is executed, the procedures in the foregoing method embodiments may be included. The foregoing storage medium includes any medium that can store program code, for example, a ROM, a random access memory RAM, a magnetic disk, or an optical disc.

In conclusion, the foregoing descriptions are only embodiments of the technical solutions of the present invention, and are not intended to limit the protection scope of the present invention. Any modifications, equivalent replacements, improvements, or the like made based on the disclosure of the present invention shall fall within the protection scope of the present invention.

## Claims

1. A multi-device collaborative control method, wherein the method is applied to a first device, and the method comprises:
displaying a first interface, wherein the first interface comprises a first region, a second region, and a third region, the first region comprises an identifier for a second device, the second region comprises identifiers for a first group of applications of the second device, and the third region comprises a control panel for a first application among the first group of applications;
displaying an identifier for a switched third device in the first region, displaying identifiers for a second group of applications of the switched third device in the second region, and displaying a control panel for a second application among the switched second group of applications in the third region, in response to a first operation;
displaying an identifier for a switched third application in the second region, and displaying a control panel for the switched third application in the third region, in response to a second operation; and
executing a first task corresponding to the third application in response to a third operation.

2. The multi-device collaborative control method according to claim 1, wherein
in response to the second operation, the method further comprises: switching an identifier for an application in a selected state in the second region from the identifier for the second application to the identifier for the third application.

3. The multi-device collaborative control method according to claim 1 or 2, wherein the first task comprises any one or more of the following:
displaying running details of the third application; or
controlling a running state of the third application.

4. The multi-device collaborative control method according to claim 3, wherein the controlling a running state of the third application comprises any one or more of the following:
controlling a running state of the third application in the third device; or
controlling a running state of the third application in the first device.

5. The multi-device collaborative control method according to any one of claims 1-4, wherein the third application is an audio/video application, and the executing a first task corresponding to the third application comprises: controlling the third device to pause, resume, or switch a played audio/video.

6. The multi-device collaborative control method according to any one of claims 1-5, wherein the third application is an image capture application, and the first task corresponding to the third application comprises: controlling the third device to capture an image.

7. The multi-device collaborative control method according to any one of claims 1-6, wherein the third application is an office application, and the executing a first task corresponding to the third application comprises: controlling the third device to pause, resume, or switch a presentation document.

8. The multi-device collaborative control method according to any one of claims 1-7, wherein the third application is a social application, and the executing a first task corresponding to the third application comprises: answering/hanging up a call.

9. The multi-device collaborative control method according to any one of claims 1-8, wherein before the first operation, the method further comprises:
executing a first task corresponding to the first application in response to a fourth operation.

10. The multi-device collaborative control method according to any one of claims 1-9, wherein the control panel comprises application information, and a control for controlling an application.

11. The multi-device collaborative control method according to any one of claims 1-10, wherein the first operation comprises any one or more of the following:
an operation performed on the first region; or
an operation performed on a crown of a watch when the first device is the watch.

12. The multi-device collaborative control method according to any one of claims 1-11, wherein the second operation comprises any one or more of the following:
an operation performed on the second region; or
an operation performed on a crown of a watch when the first device is the watch.

13. The multi-device collaborative control method according to any one of claims 1-12, wherein the third operation comprises any one or more of the following:
an operation performed on the third region; or
an operation performed on a crown of a watch when the first device is the watch.

14. The multi-device collaborative control method according to any one of claims 1-13, wherein an area of the first region is smaller than an area of the second region, and the area of the second region is smaller than an area of the third region.

15. The multi-device collaborative control method according to any one of claims 1-14, wherein the first region is located on an upper side of a screen of the first device, the second region is located on a left side of the screen of the first device, and the third region is located on a right side of the screen of the first device.

16. The multi-device collaborative control method according to any one of claims 1-15, wherein the first device is a wearable device.

17. The multi-device collaborative control method according to any one of claims 1-16, wherein the method further comprises: establishing, by the first device, a connection with the second device before displaying the first interface.

18. The multi-device collaborative control method according to claim 17, wherein the establishing, by the first device, a connection with the second device specifically comprises:
displaying a second interface, wherein the second interface comprises an identifier for a global control function and the identifier for the second device; and
establishing, by the first device, a connection with the second device in response to an operation of dragging the identifier for the global control function to the identifier for the second device and releasing the identifier for the global control function.

19. The multi-device collaborative control method according to any one of claims 1-18, wherein the method further comprises: establishing, by the first device, a connection with the third device before or after displaying the identifier for the third device.

20. An electronic device, wherein the electronic device comprises one or more memories and one or more processors; the memory is coupled to the one or more processors; the memory is configured to store computer program code; the computer program code comprises computer instructions; and the one or more processors invoke the computer instructions to enable the electronic device to perform the method according to any one of claims 1-19.

21. A communication system, wherein the communication system comprises a first device, a second device, and a third device, and the first device comprises one or more memories and one or more processors; the memory is coupled to the one or more processors; the memory is configured to store computer program code; the computer program code comprises computer instructions; and the one or more processors invoke the computer instructions to enable the first device to perform the method according to any one of claims 1-19.

22. A chip, applied to an electronic device, wherein the chip comprises one or more processors, and the processor is configured to invoke computer instructions to enable the electronic device to perform the method according to any one of claims 1-19.

23. A computer-readable storage medium, comprising instructions, wherein when the instructions run on an electronic device, the electronic device is enabled to perform the method according to any one of claims 1-19.
